(19) Europäisches Patentamt
European Patent Office
Office européen des brevets

(11) EP 3 840 374 B1

(12) EUROPEAN PATENT SPECIFICATION

(45) Date of publication and mention of the grant of the patent:
**19.07.2023 Bulletin 2023/29**

(21) Application number: **20861992.4**

(22) Date of filing: **28.09.2020**

(51) International Patent Classification (IPC):
***H04N 13/31*** *(2018.01)* ***G02B 27/01*** *(2006.01)*
***G02B 30/32*** *(2020.01)* ***G09G 5/00*** *(2006.01)*
***G09G 5/36*** *(2006.01)* ***H04N 13/366*** *(2018.01)*
***H04N 13/398*** *(2018.01)*

(52) Cooperative Patent Classification (CPC):
**G02B 30/32; G02B 27/0172; H04N 13/31; H04N 13/366; H04N 13/398;** G02B 2027/0134

(86) International application number:
**PCT/JP2020/036690**

(87) International publication number:
**WO 2021/065826 (08.04.2021 Gazette 2021/14)**

# (54) THREE-DIMENSIONAL DISPLAY DEVICE, THREE-DIMENSIONAL DISPLAY SYSTEM, HEAD-UP DISPLAY, AND MOBILE BODY

DREIDIMENSIONALE ANZEIGEVORRICHTUNG, DREIDIMENSIONALES ANZEIGESYSTEM, HEADUP-ANZEIGESYSTEM UND MOBILER KÖRPER

DISPOSITIF D'AFFICHAGE TRIDIMENSIONNEL, SYSTÈME D'AFFICHAGE TRIDIMENSIONNEL, DISPOSITIF D'AFFICHAGE TÊTE HAUTE ET CORPS MOBILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2019 JP 2019178949**

(43) Date of publication of application:
**23.06.2021 Bulletin 2021/25**

(73) Proprietor: **Kyocera Corporation**
**Kyoto-shi,**
**Kyoto 6128501 (JP)**

(72) Inventors:
- **SATOU, Akinori**
**Kyoto-shi, Kyoto 612-8501 (JP)**
- **KUSAFUKA, Kaoru**
**Kyoto-shi, Kyoto 612-8501 (JP)**

(74) Representative: **Viering, Jentschura & Partner mbB**
**Patent- und Rechtsanwälte**
**Am Brauhaus 8**
**01099 Dresden (DE)**

(56) References cited:
**EP-A1- 3 037 922** **EP-A2- 2 418 862**
**WO-A1-2018/105533** **WO-A1-2019/171557**
**JP-A- H02 301 798** **JP-A- 2010 039 556**
**JP-A- 2012 080 439** **JP-A- 2014 195 141**
**JP-A- 2015 008 394** **JP-A- 2016 116 221**
**JP-A- 2019 082 671**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 840 374 B1

## Description

### Technical Field

The present invention relates to a three-dimensional display device, a three-dimensional display system, a head-up display, and a mobile object.

### Background Art

In a related art, a three-dimensional display device acquires positional data indicating the positions of user's eyes detected by using images of user's eyes photographed by a camera. The three-dimensional display device causes a display unit to show images in a manner permitting viewing of an image for left eye by user's left eye, as well as viewing of an image for right eye by user's right eye, on the basis of eye positions indicated by the positional data (refer to Patent Literature 1, for instance).

Unfortunately, there is a time lag between the time of imaging user's eyes by the camera and the time of displaying images based on eye positions by the three-dimensional display device. In consequence, when the positions of user's eyes vary after that point in time when the camera imaged user's eyes, the resulting three-dimensional image displayed by the three-dimensional display device may not be comfortably viewed as a proper three-dimensional image by the user.

A three-dimensional display device according to the preamble of claim 1 is, e.g., known from EP 2 418 862 A2.

WO 2018/105533 A1 discloses an image projection device, an image display device and a moving body.

EP 3 037 922 A1 discloses an apparatus and a method for predicting an eye position.

### Citation List

### Patent Literature

Patent Literature 1: Japanese Unexamined Patent Publication JP-A 2001-166259

### Summary of Invention

The invention provides a three-dimensional display device according to claim 1, a three-dimensional display system according to claim 9, a head-up display according to claim 10 and a mobile object according to claim 11. Further embodiments are described in the dependent claims.

### Brief Description of Drawings

Other and further objects, features, and advantages of the invention will be more explicit from the following detailed description taken with reference to the drawings wherein:

FIG. 1 is a diagram showing a schematic structure of the three-dimensional display system according to an embodiment of the disclosure;
FIG. 2 is a diagram illustrating an example of a display panel shown in FIG. 1, as viewed in a depth direction;
FIG. 3 is a diagram illustrating a parallax barrier shown in FIG. 1, as viewed in the depth direction;
FIG. 4 is a diagram illustrating the display panel and the parallax barrier shown in FIG. 1, as seen from the parallax barrier by a left eye of a user;
FIG. 5 is an illustration of the display panel and the parallax barrier shown in FIG. 1, as seen from the parallax barrier by a right eye of the user;
FIG. 6 is an explanatory diagram illustrating an eye position-visible region relationship;
FIG. 7 is an explanatory diagram illustrating timewise relationships among imaging of eyes, acquisition of positional data, initiation of display control based on predicted eye positions, and image display on the display panel;
FIG. 8 is an explanatory flow chart illustrating processing operation to be carried out by the detection device;
FIG. 9 is an explanatory flow chart showing one example of prediction-function generation processing to be executed by the three-dimensional display device;
FIG. 10 is an explanatory flow chart showing one example of image display processing to be executed by the three-dimensional display device;
FIG. 11 is an explanatory flow chart showing another example of prediction-function generation processing and image display processing to be executed by the three-dimensional display device;
FIG. 12 is an explanatory diagram illustrating information for identification of the position of the left eye and the position of the right eye;
FIG. 13 is a diagram illustrating an example of an image table indicating a correspondence between the position of the left eye, as well as the position of the right eye, and an image to be displayed via each subpixel under a condition where an inter-eye distance conforms with a normal distance;
FIG. 14 is a diagram illustrating an HUD installed with the three-dimensional display system shown in FIG. 1; and
FIG. 15 is a diagram illustrating a mobile object installed with the HUD shown in FIG. 14.

### Description of Embodiments

An embodiment of the disclosure will now be described in detail with reference to the drawings. The drawings to be referred to in the following description are schematic representations. Thus, dimensional ratios and so forth shown in the drawings may not completely coincide with actualities.

As shown in FIG. 1, a three-dimensional display system 10 according to an embodiment of the present disclosure includes a detection device 1 and a three-dimensional display device 2.

The detection device 1 may be configured to acquire images photographed by a camera configured to take an image of a space where user's eyes are expected to exist at regular time intervals (at 20 fps (frames per second), for instance). The detection device 1 is configured to detect the images of user's left eye (first eye) and right eye (second eye) one after another from the photographed images acquired from the camera. The detection device 1 is configured to detect the positions of the left eye and the right eye in the real space on the basis of the images of the left eye and the right eye in the photographed space. The detection device 1 may be configured to detect the positions of the left eye and the right eye represented in three-dimensional space coordinates from the images photographed by one camera. The detection device 1 may be configured to detect the positions of the left eye and the right eye represented in three-dimensional space coordinates from the images photographed by two or more cameras. The detection device 1 may be equipped with a camera. The detection device 1 is configured to successively transmit pieces of data on the positions of the left and right eyes in the real space to the three-dimensional display device 2.

The three-dimensional display device 2 includes an acquisition section 3, an irradiator 4, a display panel 5, a parallax barrier 6 provided as an optical element, a memory 7, and a controller 8.

The acquisition section 3 is configured to acquire pieces of data on eye positions successively transmitted from the detection device 1.

The irradiator 4 may be configured to planarly irradiate the display panel 5. The irradiator 4 may include a light source, a light guide plate, a diffuser plate, a diffuser sheet, etc. The irradiator 4 is configured to homogenize irradiation light emitted from the light source in a planar direction of the display panel 5 via the light guide plate, the diffuser plate, the diffuser sheet, etc. The irradiator 4 may be configured to emit the homogenized light toward the display panel 5.

For example, a display panel such as a transmissive liquid-crystal display panel may be adopted for use as the display panel 5. As shown in FIG. 2, the display panel 5 includes a planar active area A with a plurality of segment regions thereon. The active area A is configured to display a parallax image. The parallax image include a left-eye image (first image) and a right-eye image (second image), which exhibits parallax with respect to the left-eye image. The plurality of segment regions are obtained by partitioning the active area A in a first direction and a direction perpendicular to the first direction within the surface of the active area A. For example, the first direction conforms to a horizontal direction. For example, the direction perpendicular to the first direction conforms to a vertical direction. A direction perpendicular to each of the horizontal direction and the vertical direction may be called "depth direction". In the drawings, the horizontal direction is designated as an x-axis direction; the vertical direction is designated as a y-axis direction; and the depth direction is designated as a z-axis direction.

The plurality of segment regions are each assigned a single subpixel P. That is, the active area A includes a matrix with horizontal and vertical rows of a plurality of subpixels P arranged in a grid pattern.

Each of the plurality of subpixels P may be associated with one of the following colors: R (Red); G (Green); and B (Blue). A set of three subpixels P corresponding to R, G, and B, respectively, can constitute one pixel. One pixel may be called "one picture element". The plurality of subpixels P constituting one pixel may be aligned in the horizontal direction. The plurality of subpixels P associated with one and the same color may be aligned in the vertical direction. The plurality of subpixels P may be given the same horizontal length Hpx. The plurality of subpixels P may be given the same vertical length Hpy.

The display panel 5 is not limited to a transmissive liquid-crystal panel, and may thus be of a display panel of other type such as an organic EL display panel. Examples of transmissive display panels include, in addition to liquid-crystal panels, MEMS (Micro Electro Mechanical Systems) shutter-based display panels. Examples of self-luminous display panels include organic EL (electro-luminescence) display panels and inorganic EL display panels. In the case where the display panel 5 is constructed of a self-luminous display panel, the irradiator 4 may be omitted from the three-dimensional display device 2.

The plurality of subpixels P consecutively arranged in the active area A as described above constitute one subpixel group Pg. For example, one subpixel group Pg includes a matrix of predetermined numbers of horizontally and vertically arranged subpixels. One subpixel group Pg includes ($2 \times n \times b$) subpixels P1 to P($2 \times n \times b$) consecutively arranged in the form of a b (vertical)- by n (horizontal)-subpixel matrix. The plurality of subpixels P constitute a plurality of subpixel groups Pg. The subpixel group Pg is repeatedly arranged in the horizontal direction to define a horizontal row of the plurality of subpixel groups Pg. In the vertical direction, the subpixel group Pg is repeatedly arranged to define a vertical row of the plurality of subpixel groups Pg such that each subpixel group is horizontally displaced with respect to its neighboring subpixel group by a distance corresponding to j subpixel(s) ($j < n$). This embodiment will be described assuming j of 1, n of 4, and b of 1 by way of example. In this embodiment, as shown in FIG. 2, the active area A includes the plurality of subpixel groups Pg each including 8 subpixels P1 to P8 consecutively arranged in the form of a 1 (vertical)- by 8 (horizontal)-subpixel matrix. P1 to P8 refer to information for identification of a plurality of subpixels. In FIG. 2, some subpixel groups are marked with a reference character Pg.

A plurality of mutually corresponding subpixels P of all the subpixel groups Pg display images of the same type, and carry out displayed-image switching timewise in synchronism with one another. The displayed-image switching means switching between the left-eye image and the right-eye image. The plurality of subpixels P constituting one subpixel group Pg carry out image display while carrying out switching between the left-eye image and the right-eye image. For example, the plurality of subpixels P1 of, respectively, all the subpixel groups Pg carry out displayed-image switching timewise in synchronism with one another. Likewise, a plurality of mutually corresponding subpixels P, bearing different identification information, of all the subpixel groups Pg carry out displayed-image switching timewise in synchronism with one another.

The plurality of subpixels P constituting one subpixel group Pg display their respective images independently. The plurality of subpixels P constituting the subpixel group Pg carry out image display while carrying out switching between the left-eye image and the right-eye image. For example, the plurality of subpixels P1 may carry out switching between the left-eye image and the right-eye image timewise either in synchronism with or out of synchronism with the plurality of subpixels P2. Likewise, another two groups of the plurality of subpixels P bearing different identification information may carry out switching between the left-eye image and the right-eye image timewise either in synchronism with or out of synchronism with each other.

The parallax barrier 6 is configured to define a direction of image light for a parallax image emitted from the display panel 5. As shown in FIG. 1, the parallax barrier 6 includes a surface set along the active area A. The parallax barrier 6 is spaced by a predetermined distance (gap) g away from the active area A. The parallax barrier 6 may be located on an opposite side of the irradiator 4 with respect to the display panel 5. The parallax barrier 6 may be located on an irradiator 4-side with respect to the display panel 5.

As shown in FIG. 3, the parallax barrier 6 includes a plurality of dimming portions 61 and a plurality of light-transmitting portions 62.

The plurality of dimming portions 61 are configured to reduce emitted image light. The term "dimming" is construed as encompassing light blockage. Each of the plurality of dimming portions 61 may have a transmittance which is less than a first value. Each of the plurality of dimming portions 61 may be formed of a film or a sheet member. The film may be made of resin or other material. The sheet member may be made of resin, or metal or the like, or also other material. The form of the plurality of dimming portions 61 is not limited to the film or sheet member, and the dimming portion 61 may thus be constructed of other different member. The base material used for the plurality of dimming portions 61 may exhibit dimming properties on its own, or may contain an adjunct having dimming properties.

The plurality of light-transmitting portions 62 each enable image light to pass therethrough at a transmittance which is greater than or equal to a second value which is greater than the first value. The plurality of light-transmitting portions 62 may be made in the form of an opening in the material of construction of the plurality of dimming portions 61. Each of the plurality of light-transmitting portions 62 may be formed of a film or sheet member having a transmittance which is greater than or equal to the second value. The film may be made of resin or other material. The plurality of light-transmitting portions 62 may be created with no use of any structural member. In this case, the plurality of light-transmitting portions 62 each have a transmittance of about 100%.

With the parallax barrier 6 including the plurality of dimming portions 61 and the plurality of light-transmitting portions 62, part of image light emitted from the active area A of the display panel 5 passes through the parallax barrier 6 so as to reach user's eyes, and part of the remainder of the image light is weakened by the parallax barrier 6 so as not to reach user's eyes. Thus, part of the active area A becomes easily visible to user's eyes, whereas the remainder of the area becomes less visible to user's eyes.

A length Lb of one light-transmitting portion 62 in the horizontal direction, a barrier pitch Bp, an optimal viewing distance D, a gap g, a length Lp of a desired visible region 5a in the horizontal direction, a length Hp of one subpixel P, the number of the subpixels P(2×n) contained in the corresponding subpixel group Pg, and an inter-eye distance E may be determined so that the following expressions (1) and (2) hold. The optimal viewing distance D refers to a distance between each of user's eyes and the parallax barrier 6. The gap g refers to a distance between the parallax barrier 6 and the display panel 5. The visible region 5a refers to a region on the active area which is visible to each of user's eyes.

E:

$$D = (2 \times n \times Hp) : g \qquad (1)$$

D:

$$Lb = (D + g) : Lp \qquad (2)$$

The optimal viewing distance D refers to a distance between each of user's right and left eyes and the parallax barrier 6. The direction of a straight line passing through the right eye and the left eye (inter-eye direction) coincides with the horizontal direction. The inter-eye distance E is an average of the inter-eye distances E of users. For example, the inter-eye distance E may be set at values ranging from 61.1 mm (millimeter) to 64.4 mm obtained by calculation in the study by National Institute of Advanced Industrial Science and Technology. Hp represents the horizontal length of one subpixel.

A region of the active area A which is viewed by each of user's eyes is dependent on the position of each eye, the locations of the plurality of light-transmitting portions 62, and the optimal viewing distance D. In the following description, that region within the active area A which emits image light that travels to the position of user's eyes will be called "visible region 5a". That region within the active area A which emits image light that travels to the position of user's left eye will be called "left visible region 5aL" (first visible region). That region within the active area A which emits image light that travels to the position of user's right eye will be called "right visible region 5aR" (second visible region). That region within the active area A which emits image light that travels toward user's left eye while being weakened by the plurality of dimming portions 61 will be called "left dimming region 5bL". That region within the active area A which emits image light that travels toward user's right eye while being weakened by the plurality of dimming portions 61 will be called "right dimming region 5bR".

The memory 7 is configured to store various information processed by the controller 8. The memory 7 is constructed of a given memory device such as RAM (Random Access Memory) or ROM (Read Only Memory), for example.

The controller 8 is connected to each of the components constituting the three-dimensional display system 10. The controller 8 may be configured to control each of the constituent components. The constituent components that are controlled by the controller 8 include the display panel 5. For example, the controller 8 is built as a processor. The controller 8 may include one or more processors. Examples of the processor include a general-purpose processor for carrying out a specific function with corresponding loaded programs, and a special-purpose processor designed specifically for a specific processing operation. Examples of the special-purpose processor include a special-purpose IC (ASIC: Application Specific Integrated Circuit). Examples of the processor include a PLD (Programmable Logic Device). Examples of the PLD include a FPGA (Field-Programmable Gate Array). The controller 8 may be any one of SoC (System-on-a-Chip) and SiP (System In a Package) in which a single processor or a plurality of processors operate in cooperation. The controller 8 may be provided with a memory section for storing various information or programs for operation of the individual constituent components of the three-dimensional display system 10, etc. For example, the memory section may be constructed of a semiconductor memory device. The memory section may be made to serve as working memory for the controller 8.

As shown in FIG. 4, the controller 8 is configured to cause the plurality of subpixels P contained in their respective left visible regions 5aL to display the left-eye image, and cause the plurality of subpixels P contained in their respective left dimming regions 5bL to display the right-eye image. Thus, while the left-eye image becomes easily visible to user's left eye, the right-eye image becomes less visible to the left eye. Moreover, as shown in FIG. 5, the controller 8 is configured to cause the plurality of subpixels P contained in their respective right visible regions 5aR to display the right-eye image, and cause the plurality of subpixels P contained in their respective right dimming regions 5bR to display the left-eye image. Thus, while the right-eye image becomes easily visible to user's right eye, the left-eye image becomes less visible to the right eye. This allows the user to view a three-dimensional image with his or her eyes. In FIGS. 4 and 5, the plurality of subpixels P that are caused to display the left-eye image by the controller 8 are each marked with a reference character "L", and the plurality of subpixels P that are caused to display the right-eye image by the controller 8 are each marked with a reference character "R".

The left visible region 5aL is determined based on the position of the left eye. For example, as shown in FIG. 6, a left visible region 5aL when the left eye is located in a left displaced position EL1, differs from a left visible region 5aL0 when the left eye is located in a left reference position EL0. The left reference position EL0 refers to a position of the left eye which may be suitably determined as the reference. The left displaced position EL1 refers to a position of the left eye displaced from the left reference position EL0 in the horizontal direction.

The right visible region 5aR is determined based on the position of the right eye. For example, as shown in FIG. 6, a right visible region 5aR1 when the right eye is located in a right displaced position ER1, differs from a right visible region 5aR0 when the right eye is located in a right reference position ER0. The right reference position ER0 refers to a position of the right eye which may be suitably determined as the reference. The right displaced position ER1 refers to a position of the right eye displaced from the right reference position ER0 in the horizontal direction.

In the interest of user's comfortable viewing of a proper three-dimensional image, the controller 8 has to be able to cause the plurality of subpixels P contained in their respective left visible regions 5aL to display the left-eye image, as well as to cause the plurality of subpixels P contained in their respective right visible regions 5aR to display the right-eye image. It is desirable that the controller 8 be capable of exercising control in accordance with exact eye positions as of the time of image display.

The detection device 1 is configured to detect the images of user's eyes from the photographed images, and detect eye positions in the real space on the basis of the images of the eyes in the photographed space. The detection device 1 is configured to transmit positional data including eye positions in the real space to the three-dimensional display device 2. Certain periods of time are required for detection of eye positions with the detection device 1, for transmission of positional data from the detection device 1 to the three-dimensional display device 2, and for changing of displayed image made on the basis of received positional data to take effect. There is a lag between a time at which user's face was photographed by the detection device 1 and a display time at which an image based on the positions of the eyes of the face is displayed. This time lag involves a detection time period, a transmission time period, and a time period required for image changing to take effect, which will be referred to as an updating time period. The time lag is dependent on the performance capability of the detection device 1, the speed of communication between the detection device 1 and the three-dimensional display device, etc. When user's eyes move faster than a speed obtained by dividing a unit length of control for changing of displayed image in response to the movement of user's eyes by the time lag, then the user views an image irrelevant to the eye positions. For example, let the control unit length be 62.4 mm and the time lag be 65 ms, then, as user's eyes move at a speed of 0.24 mm/ms (0.24 millimeter per millisecond) or more, or equivalently at a speed of 24 cm/s (24 centimeter per second) or more, the user may feel a sense of discomfort about the displayed three-dimensional image.

The controller 8 carries out the following processing operation to reduce the occurrence of such a trouble in viewing three-dimensional images. "Eye" as used in the following description may refer to left eye as well as right eye.

(Positional data-storage processing)

The controller 8 is configured to enable the memory 7 to store data which indicates eye positions (actually measured eye positions) acquired by the acquisition section 3, and the order in which pieces of the positional data were acquired. The memory 7 successively stores measured eye positions based on a plurality of photographed images captured at predetermined imaging time intervals, respectively. The order in which the eyes assumed the measured eye positions may also be stored in the memory 7. The predetermined imaging time interval refers to a time interval between captures of first and second images, which may be suitably determined with consideration given to the performance capability and design of the camera.

(Filtering processing)

The controller 8 may be configured to filter out positional data stored in the memory 7 using a low-pass filter, for example. The controller 8 may filter out data on eye positions with large variation per unit time. The controller 8 may extract effective positional data by filtering from data on eye positions detected with a low degree of accuracy. The controller 8 may, in calculation of prediction functions, increase the accuracy of the prediction functions by filtering. The controller 8 may carry out filtering in a manner to extract only data on eye positions with less variation over time, and more specifically only data on eye positions whose positional variation frequencies are lower than a predetermined value. The predetermined value refers to the experimentally or otherwise determined maximum value of a frequency of positional variation required to ensure desired accuracy.

(Prediction processing (Calculation of prediction functions))

The controller 8 is configured to output positions in the future as predicted eye positions by using a plurality of pieces of positional data stored in the memory 7. As used herein the future refers to a future time with respect to a plurality of pieces of positional data stored in the memory 7. The controller 8 may use a plurality of pieces of positional data that have undergone filtering using a low-pass filter. The controller 8 may be configured to output predicted eye positions by using a plurality of pieces of new positional data. The controller 8 may be configured to calculate prediction functions based on, out of positional data stored in the memory 7, for example, a plurality of pieces of recently stored positional data, and the display-updating time period. The controller 8 may be configured to determine how recently each data has been stored based on the time of imaging. The controller 8 may be configured to calculate prediction functions on the basis of actually measured eye positions, an acquisition time at which positional data was acquired by the acquisition section 3, and an experimentally or otherwise estimated updating time period.

A prediction function may be of a function derived by fitting calculation of a plurality of pairs of measured eye positions and a timing of imaging the measured eye positions. The time of imaging may be adopted as the imaging timing to derive the prediction function. The prediction function is used to output predicted eye positions as of a time equal to the current time plus the updating time period. More specifically, the controller 8 is designed so that, let a time equal to the acquisition time minus the updating time period be a time at which the eyes were in measured eye positions, on the basis of measured eye positions and the time at which the eyes were in the measured eye positions, a prediction function indicating the relationship between a time later than the current time and eye positions as of the time can be calculated. The prediction function may be of a function derived by fitting calculation of a plurality of measured eye positions arranged on an imaging-rate basis. The prediction function may be brought into correspondence with the current time in accordance with the updating time period.

As exemplified in FIG. 7, the controller 8 is configured to calculate prediction functions on the basis of: the most recently measured eye position Pm0 and an eye-imaging time tm0 corresponding to the most recently measured eye position; the second most recently measured eye position Pm1 and an eye-imaging time tm1 corresponding to the second most recently measured eye position; and the third most recently measured eye position Pm2 and an eye-imaging time tm2 corresponding to the third most recently measured eye position. The most recently measured eye position Pm0 is the position indicated by data corresponding to the most recent imaging time. The second most recently measured eye position Pm1 is the position indicated by data corresponding to an imaging time one time before the most recent imaging time for the most recently measured eye position Pm0. The third most recently measured eye position Pm2 is the position indicated by data corresponding to an imaging time one time before the second most recent imaging time for the second most recently measured eye position Pm1.

The above-described filtering step may be omitted from the procedure to be followed by the controller 8. In this case, the controller 8 may be configured to likewise output predicted eye positions using a plurality of pieces of unfiltered positional data stored in the memory 7 through positional-data storage processing operation.

(Prediction processing (Output of predicted eye positions))

The controller 8 is configured to output, at predetermined output time intervals, predicted eye positions as of a time equal to the current time plus a predetermined time period based on the prediction functions. The predetermined time period corresponds to a display-processing time period estimated as a necessary time interval between the initiation of display control by the controller 8 and the completion of image display on the display panel 5. The predetermined output time interval may be shorter than the predetermined imaging time interval.

(Image display processing)

The controller 8 is configured to start control operation to cause each subpixel P to display an image in correspondence with the visible region 5a which is based on the most recently outputted predicted eye positions, at display time intervals determined so that the display panel 5 carries out image updates at predetermined frequencies. After a lapse of the display-processing time period since the initiation of each display control by the controller 8, predicted eye position-based images are displayed and updated on the display panel 5.

For example, a camera designed for photographing at 20 fps may be adopted for use in the detection device 1. This camera carries out imaging at 50-ms time intervals. The controller 8 may be configured to output photographed images at output time intervals equal to the imaging time intervals. The controller 8 may be configured to output photographed images at output time intervals different from the imaging time intervals. The output time interval may be shorter than the imaging time interval. The output time interval may be set at 20 ms. In this case, the controller 8 outputs predicted eye positions once every 20 ms (at 50 sps (samples per second)). The controller 8 is capable of image display based on predicted eye positions outputted at time intervals shorter than the imaging time intervals. Thus, the three-dimensional display device 2 allows the user to view a three-dimensional image adapted to minutely varying eye positions.

The output time interval may be shorter than the display time interval during which the image displayed on the display panel 5 is updated. For example, in the case where the controller 8 acts to update the image displayed on the display panel 5 at 60 Hz (Hertz), expressed differently, in the case where the display time interval is set at about 16.7 ms, the output time interval may be set at 2 ms. In this case, the controller 8 output predicted eye positions once every 2 ms (namely, at 500 sps). The controller 8 is capable of image display based on the positions of the left and right eyes as of a time closer to the time of image display than the last image-display time. Thus, the three-dimensional display device 2 minimizes the difficulty of user's viewing of a proper three-dimensional image entailed by variation in eye positions.

(Evaluation processing)

The controller 8 may evaluate prediction functions, and modify the prediction functions in accordance with the results of evaluation. More specifically, the controller 8 may carry out a comparison between the output of prediction function-based predicted eye positions and measured eye positions detected from the actually photographed images corresponding to the predicted eye positions. The controller 8 may bring the predicted eye positions into correspondence with the measured eye positions on the basis of the recorded time of imaging. The controller 8 may bring the predicted eye positions into correspondence with the measured eye positions on the basis of the imaging time interval. The controller 8 may modify the prediction functions in accordance with the results of comparison. The controller 8 may, in the subsequent prediction processing operation, output eye positions predicted by using the modified prediction functions, and cause the display panel 5 to display an image based on the predicted eye positions which are obtained by using the modified prediction functions.

The following describes the operation of the three-dimensional display system 10 according to this embodiment with reference to flow charts shown in FIGS. 8 to 10. Referring first to the flow chart of FIG. 8, the operation of the detection device 1 of this embodiment will be described.

The detection device 1 acquires one particular image photographed by the camera (Step S11).

Upon acquiring the one photographed image in Step S11, the detection device 1 detects one particular eye position from the one photographed image acquired (Step S12) .

Upon detecting the one eye position in Step S12, the detection device 1 transmits positional data indicating the one eye position to the three-dimensional display device 2 (Step S13).

Upon transmitting the positional data in Step S13, the detection device 1 determines whether a task-termination command has been inputted (Step S14).

Upon determining that a task-termination command has been inputted in Step S14, the detection device 1 brings the procedure to an end. Upon determining that no task-termination command has been inputted, the detection device 1 returns the procedure to Step S11, and from then on repeats a sequence of Steps S11 to S13.

The following describes the operation of the three-dimensional display device 2 according to this embodiment with reference to flow charts shown in FIGS. 9 and 10. Referring first to the flow chart of FIG. 9, the operation of the three-dimensional display device 2 in prediction-function generation processing will be described.

The controller 8 of the three-dimensional display device 2 determines whether positional data has been received by the acquisition section 3 (Step S21).

Upon determining that no positional data has been received in Step S21, the controller 8 returns the procedure to Step S21. Upon determining that positional data has been received in Step S21, the controller 8 causes the memory 7 to store the positional data (Step S22) .

The controller 8 filters out the positional data stored in the memory 7 (Step S23).

The controller 8 generates prediction functions on the basis of the filtered positional data (Step S24).

The controller 8 determines whether positional data has been received by the acquisition section 3 once again (Step S25).

Upon determining that no positional data has been received in Step S25, the controller 8 returns the procedure to Step S25. Upon determining that positional data has been received in Step S25, the controller 8 causes the memory 7 to store the positional data (Step S26) .

The controller 8 filters out the positional data stored in the memory 7 (Step S27).

The controller 8 modifies the prediction functions using, out of measured eye positions indicated by the filtered positional data, measured eye positions indicated by data on eye positions imaged at a display time, i.e the time of image display, in display processing operation that will hereafter be described in detail (Step S28).

The controller 8 determines whether a command to terminate prediction-function generation processing has been inputted (Step S29).

Upon determining that a command to terminate prediction-function generation processing has been inputted in Step S29, the controller 8 brings the prediction-function generation processing to an end. Upon determining that no prediction-function generation processing-termination command has been inputted, the controller 8 returns the procedure to Step S21.

One of or both of Step S23 and Step S27 are optional in the procedure to be carried out by the controller 8. The controller 8 may execute Step S27 on an optional basis throughout the process, from initiation to termination, to be carried out repeatedly.

The following describes the operation of the three-dimensional display device 2 in image display processing with reference to the flow chart of FIG. 10.

The controller 8 outputs predicted eye positions based on prediction functions predicted or modified most recently in the described prediction-function generation processing operation, at the output time intervals (Step S31) .

The controller 8 changes the displayed image in accordance with the most recently outputted predicted eye positions at the display time intervals, and causes the display panel 5 to display the updated image (Step S32).

The controller 8 determines whether a command to terminate image display processing has been inputted (Step S33) .

Upon determining that an image display processing-termination command has been inputted in Step S33, the controller 8 brings the image display processing to an end. Upon determining that no image display processing-termination command has been inputted, the controller 8 returns the procedure to Step S31.

As thus far described, the three-dimensional display device 2 according to this embodiment outputs predicted eye positions as of a future display time later than the current time based on positional data stored in the memory 7, and causes each subpixel P of the display panel to display a parallax image based on the predicted eye positions. Thus, as contrasted to conventional display devices in which, on acquisition of eye positions detected from photographed images, control operation for image display is started on the basis of the acquired eye positions, the three-dimensional display device 2 achieves image display based on eye positions as of a time closer to the time of image display, and hence reduces the difficulty of user's viewing of a proper three-dimensional image even with variation in the positions of user's eyes.

The three-dimensional display device 2 according to this embodiment calculates a prediction function indicating the relationship between a future display time and eye positions based on positional data stored in the memory 7, and outputs predicted eye positions based on the prediction function. The three-dimensional display device 2 can output predicted eye positions without reference to the time of imaging by the camera.

The three-dimensional display device 2 according to this embodiment may output predicted eye positions based on the prediction function at output time intervals different from the imaging time intervals. The three-dimensional display device 2 can output predicted eye positions at output time intervals that are independent of the time intervals of imaging by the camera.

The three-dimensional display device 2 according to this embodiment may output predicted eye positions based on the prediction function at output time intervals shorter than the imaging time intervals. The three-dimensional display device 2 may provide a three-dimensional image adapted to eye positions varying at time intervals shorter than the imaging time intervals.

The three-dimensional display device 2 according to this embodiment modifies the prediction function depending on the results of comparison between predicted eye positions and measured eye positions. The three-dimensional display device 2 can achieve proper output of predicted eye positions based on each of modified prediction functions. The three-dimensional display device 2 can achieve image display based on proper predicted eye positions. The three-dimensional display device 2 can reduce the difficulty of user's viewing of a proper three-dimensional image entailed by variation in eye positions.

For example, certain ambient light conditions or the presence of an obstacle on an optical path between user's eyes and the camera may hinder the detection device 1 from detecting eye positions. The acquisition section 3 may fail to acquire positional data in the event of unsuccessful eye-position detection by the detection device 1. In this regard, in the three-dimensional display device 2 according to this embodiment, even if the acquisition section 3 failed to acquire positional data, the following processing operation by the controller 8 makes it possible to reduce a decrease in prediction function accuracy, and thereby reduce the difficulty of user's viewing of a proper three-dimensional image.

(Prediction processing (Output of prediction position as of current time))

The controller 8 may be configured to, when the acquisition section 3 failed to acquire positional data, output predicted eye positions as of the current time using a plurality of pieces of positional data stored in the memory 7. The controller 8 may be configured to calculate a prediction function for prediction of eye positions as of the current time using a plurality of pieces of positional data stored in the memory 7. The prediction function for prediction of eye positions as of the current time may be referred to as the first prediction function. The controller 8 may be configured to output predicted eye positions as of the current time based on the first prediction function.

For calculation of the first prediction function, the controller 8 may use a plurality of pieces of positional data that have undergone filtering using a low-pass filter. The controller 8 may be configured to output predicted eye positions based on a plurality of pieces of new positional data. The controller 8 may be configured to calculate the first prediction function based on, out of positional data stored in the memory 7, for example, a plurality of pieces of recently stored positional data, and the display-updating time period. The controller 8 may be configured to determine how recently each data has been stored based on the time of imaging. By way of example, the memory 7 is configured to store only the positional data necessary for calculation of the first prediction function, and the controller 8 may be configured to calculate the first prediction function based on all the positional data stored in the memory 7. The controller 8 may be configured to calculate the first prediction function on the basis of actually measured eye positions, the time of acquisition at which positional data was acquired by the acquisition section 3, and an experimentally or otherwise estimated updating time period.

The controller 8 may be configured to, when the acquisition section 3 acquired positional data, carry out a comparison between the acquired positional data and, out of a plurality of pieces of positional data stored in the memory 7, the most recently stored positional data. When these two pieces of positional data indicate the same value, the controller 8 may determine that the acquisition section 3 failed to acquire positional data. In other words, the controller 8 may be configured to, when the acquisition section 3 consecutively acquired same-value positional data pieces, determine that the acquisition section 3 failed to acquire positional data. As used herein same-value positional data pieces may refer to two pieces of positional data that are in perfect agreement with each other in respect of three coordinate values in three-dimensional space. The same-value positional data pieces may be two pieces of positional data such that the sum of differences among three coordinate values in three-dimensional space is less than a threshold value, or may be two pieces of positional data such that the maximum value of differences among three coordinate values in three-dimensional space is less than a threshold value. The threshold value may be experimentally or otherwise determined in advance.

The controller 8 may be configured to, when the acquisition section 3 consecutively acquired same-value positional data pieces, discard the second piece, namely that one of the consecutively acquired two positional data pieces which has been acquired more recently. The controller 8 may be configured to output predicted eye positions as of the current time based on a plurality of pieces of positional data including that one of the consecutively acquired two positional data pieces which has been acquired previously.

(Prediction processing (Output of prediction position as of future time))

The controller 8 is configured to output predicted eye positions as of a future time using a plurality of pieces of positional data including predicted eye positions as of the current time. As used herein the future time refers to a time later than the current time. The controller 8 may be configured to calculate a prediction function for prediction of eye positions as of the current time using a plurality of pieces of positional data stored in the memory 7. The prediction function for prediction of eye positions as of the future time may be referred to as a second prediction function. The controller 8 may be configured to output predicted eye positions as of the future time based on the second prediction function.

For calculation of the second prediction function, the controller 8 may use a plurality of pieces of positional data that have undergone filtering using a low-pass filter. The controller 8 may be configured to output predicted eye positions using a plurality of pieces of new positional data. The controller 8 may be configured to calculate the second prediction function based on, out of positional data stored in the memory 7, for example, a plurality of pieces of recently stored positional data, and the display-updating time period. The controller 8 may be configured to determine how recently each data has been stored based on the time of imaging. The controller 8 may be configured to calculate the second prediction function on the basis of actually measured eye positions, the time of acquisition at which positional data was acquired by the acquisition section 3, and an experimentally or otherwise estimated updating time period. The second prediction function may be equal to the first prediction function, or may differ from the first prediction function.

(Image display processing)

The controller 8 is configured to start control operation to cause each subpixel P to display an image in correspondence with the visible region 5a based on the most recently outputted predicted eye positions at display time intervals determined so that the display panel 5 carries out image updates at predetermined frequencies. After a lapse of the display-processing time period since the initiation of each display control by the controller 8, predicted eye position-based images are displayed and updated on the display panel 5.

(Evaluation processing)

The controller 8 may evaluate the second prediction function, and modify the second prediction function in accordance with the results of evaluation. The controller 8 may carry out a comparison between the output of second prediction function-based predicted eye positions and measured eye positions detected from the actually photographed images corresponding to the predicted eye positions. The controller 8 may bring the predicted eye positions into correspondence with the measured eye positions on the basis of the recorded time of imaging. The controller 8 may bring the predicted eye positions into correspondence with the measured eye positions on the basis of the imaging time interval. The controller 8 may modify the second prediction function in accordance with the results of comparison. The controller 8 may, in the subsequent prediction processing operation, output eye positions predicted by using the modified second prediction function, and cause the display panel 5 to display an image based on the predicted eye positions obtained by using the modified second prediction function.

The following describes another example of prediction-function generation processing and image display processing to be carried out by the three-dimensional display device 2 with reference to the flow chart of FIG. 11. The controller 8 may execute the procedural steps shown in the flow chart of FIG. 11 at time intervals shorter than the time intervals of imaging by the camera of the detection device 1.

The controller 8 of the three-dimensional display device 2 determines whether positional data has been received by the acquisition section 3 (Step S41).

Upon determining that no positional data has been received in Step S41, the controller 8 calculates the first prediction function using a plurality of pieces of positional data stored in the memory 7, and outputs predicted eye positions as of the current time based on the first prediction function (Step S42).

The controller 8 calculates the second prediction function based on a plurality of pieces of positional data including predicted eye positions as of the current time, and output predicted eye positions as of a future time based on the second prediction function (Step S43).

The controller 8 changes the displayed image in accordance with the predicted eye positions as of the future time at the display time intervals, and causes the display panel 5 to display the updated image (Step S44).

The controller 8 determines whether an image display processing-termination command has been inputted (Step S45).

Upon determining that an image display processing-termination command has been inputted in Step S45, the controller 8 brings the image display processing to an end. Upon determining that no image display processing-termination command has been inputted, the controller 8 returns the procedure to Step S43.

Upon determining that positional data has been received in Step S41, the controller 8 determines whether same-value positional data pieces have been consecutively acquired (Step S46). For the determination in Step S46, the controller 8 carries out a comparison between the received positional data and, out of a plurality of pieces of positional data stored in the memory 7, the positional data corresponding to the most recent imaging time.

Upon determining that same-value positional data pieces have been consecutively acquired in Step S46, the controller 8 discards a second piece of potential data, which is consecutively acquired again (Step S47), and permits the procedure to proceed to Step S42.

Upon determining that same-value positional data pieces have not been consecutively acquired in Step S46, the controller 8 permits the procedure to proceed to Step S22 shown in the flow chart of FIG. 9.

As thus far described, the three-dimensional display device 2 according to this embodiment carries out calculation of predicted eye positions as of the current time based on a plurality of pieces of positional data stored in the memory 7 when the acquisition section 3 failed to acquire positional data, and then outputs the predicted eye positions as positional data corresponding to the current time. Thus, even if the detection device 1 failed to detect eye positions, the three-dimensional display device 2 achieves accurate prediction of eye positions as of the current time.

The three-dimensional display device 2 output predicted eye positions as of a future time based on a plurality of pieces of positional data including predicted eye positions as of the current time, and causes each subpixel P of the display panel 5 to display a parallax image based on the predicted eye positions as of the future time. Thus, even if the detection device 1 failed to detect eye positions, the three-dimensional display device 2 achieves accurate prediction of eye positions as of the future time. The three-dimensional display device 2 achieves image display based on predicted eye positions as of a future time, and hence reduces the difficulty of user's viewing of a proper three-dimensional image.

In this embodiment, on the basis of a photographed image that the detection device 1 acquired from the camera and the time of taking the image, the controller 8 predicts eye positions as of a time later than the image-taking time. Hence, the three-dimensional display device 2 may be configured so that the controller 8 and the detection device 1 operate in an asynchronous manner. In other words, the three-dimensional display device 2 may include the controller 8 and the detection device 1 that are built as mutually independent systems. In the three-dimensional display device 2 thus constructed, each of the detection device 1 and the controller 8 can be supplied with a specific clock signal with a frequency suited for assigned processing operation, ensuring that the detection device 1 and the controller 8 operate as intended at high speeds. The controller 8 and the detection device 1 may operate in response to the same clock signal in an asynchronous manner, or may operate in response to different clock signals in an asynchronous manner. The controller 8 and the detection device 1 may be designed so that one of them operates in synchronization with a first clock signal and the other operates in synchronization with a second clock signal obtained by division of the first clock signal.

In this embodiment, the controller 8 is configured to carry out generation processing and synthesis processing. The generation processing is intended to generate a left-eye image and a right-eye image to be displayed on the display panel 5. The synthesis processing is intended to combine generated left-eye image and right-eye image into a parallax image which is viewed by the user.

The generation processing may include arrangement processing for arrangement of the left-eye image and the right-eye image on a plurality of display regions included in the active area A. The generation processing includes correction processing for correcting a distortion occurring in the parallax image being viewed by the user. The controller 8 carries out the generation processing on the basis of first predicted eye positions of user's eyes. The first predicted eye positions may be predicted eye positions as of a future time later than the time of initiation of prediction processing. The controller 8 may be configured to calculate the first predicted eye positions based on positional data stored in the memory 7, and carry out the generation processing based on the calculated first predicted eye positions.

In the synthesis processing, on the basis of the second predicted eye positions of user's eyes, the plurality of subpixels P contained in their respective left-eye visible regions 5aL are caused to display the left-eye image, and the plurality of subpixels P contained in their respective left-eye dimming regions 5bL are caused to display the right-eye image. That is, the controller 8 carries out the synthesis processing based on the second predicted eye positions. The second predicted eye positions differ from the first predicted eye positions. The second predicted eye positions may be predicted eye positions as of a future time later than the time of initiation of the synthesis processing. The controller 8 may be configured to calculate the second predicted eye positions based on positional data stored in the memory 7, and carry out the synthesis processing based on the calculated second predicted eye positions.

The controller 8 may use prediction functions generated through the prediction-function generation processing shown in FIG. 9 for calculation of the first predicted eye positions and the second predicted eye positions. In this case, the three-dimensional display device 2 achieves the generation processing and the synthesis processing with adaptability to minute variation in eye positions, ensuring proper viewing of a parallax image by the user. The controller 8 may use prediction functions generated through the prediction-function generation processing in Steps S41 to S43 shown in FIG. 11 for calculation of the first predicted eye positions and the second predicted eye positions. Thus, even if the acquisition section 3 failed to acquire positional data, the three-dimensional display device 2 can achieve the generation processing and the synthesis processing with adaptability to minute variation in eye positions, and as a result, can cause the user to properly view a parallax image.

The controller 8 is configured to acquire the first predicted eye positions at a first time, and acquire the second predicted eye positions at a second time. In this case, the first predicted eye positions may be defined as predicted eye positions suited to carry out the generation processing, and the second predicted eye positions may be defined as predicted eye positions suited to carry out the synthesis processing. This enables the three-dimensional display device 2 to carry out the generation processing and the synthesis processing with adaptability to minute variation in eye positions. As a result, the three-dimensional display device 2 can cause the user to properly view a parallax image. The first time conforms to the time of initiation of the generation processing by the controller 8. The second time conforms to the time of initiation of the synthesis processing by the controller 8.

The first predicted eye positions may correspond to a first duration between the first timing and the time of parallax image display on the display panel 5. In other words, the first predicted eye positions may be defined as predicted eye positions for use in the generation processing to be executed during the first duration. The first predicted eye positions may also be considered to be positions where user's eyes are expected to exist at a point in time after a lapse of the first duration since the first timing. With the first predicted eye positions set in correspondence with the first duration, the three-dimensional display device 2 can achieve generation of the left-eye image and the right-eye image with adaptability to minute variation in eye positions. As a result, the three-dimensional display device 2 can cause the user to properly view a parallax image.

The first duration may include a first time period required for carrying out the generation processing, and a second time period required for carrying out the synthesis processing. The first duration may be longer than the output time interval set for outputting predicted eye positions by the controller 8. The first time period may be longer than the second time period.

The second predicted eye positions may correspond to a second duration between the second timing and the time of parallax image display on the display panel. In other words, the second predicted eye positions may be defined as predicted eye positions for use in the synthesis processing to be executed during the second duration. The second predicted eye positions may also be considered to be positions where user's eyes are expected to exist at a point in time after a lapse of the second duration since the second timing. With the second predicted eye positions set in correspondence with the second duration, the three-dimensional display device 2 can achieve synthesis of a parallax image adapted to minutely varying eye positions. As a result, the three-dimensional display device 2 can cause the user to properly view the parallax image.

The second duration may include a second time period required for carrying out the synthesis processing. The first duration and the second duration may differ from each other. The second duration may be shorter than the first duration. The second duration may be longer than the output time interval set for outputting predicted eye positions by the controller 8.

The first timing with which the controller 8 acquires the first predicted eye positions and the second timing with which the controller 8 acquires the second predicted eye positions may be different from or equal to each other. In the case where the first timing differs from the second timing, the prediction function used for the output of the first predicted eye positions differs from the prediction function used for the output of the second predicted eye positions, and the first predicted eye position and the second predicted eye position differ from each other accordingly. In the case where the first timing is equal to the second timing, the first duration differs from the second duration, and the first predicted eye position and the second predicted eye position differ from each other accordingly.

The controller 8 may be configured to carry out the generation processing and the synthesis processing in different units of processing. The controller 8 may be configured to carry out the generation processing and the synthesis processing in their respective suitable units of processing. In this case, the three-dimensional display device 2 allows the user to view a parallax image properly. The controller 8 may be configured to carry out the generation processing on a frame-by-frame basis. The controller 8 may be configured to carry out the generation processing for each of a plurality of frame regions individually. The controller 8 may be configured to carry out the synthesis processing on a line-by-line basis. The controller 8 may be configured to carry out the synthesis processing in a unit of single line or a plurality of lines.

(Distortion correction processing)

The following describes the correction processing which may be included in the generation processing operation. In the following description, predicted eye positions may also be referred to simply as eye positions.

As shown in FIG. 12, the position of the right eye and the position of the left eye in the horizontal direction are each identified as information 0 to 11. The information for identification of the position of the right eye is assigned identically with the information for identification of the position of the left eye under the condition where the inter-eye distance E conforms with the normal distance.

As shown in FIG. 13, the memory stores a table indicating correspondences between the position of the left eye, as well as the position of the right eye, under the condition where the inter-eye distance E conforms with the normal distance, and a left subpixel of which a predetermined proportion or more is included in a left-eye visible region 51aL, as well as a right subpixel of which a predetermined proportion or more is included in a right-eye visible region 51aR. In the table as exemplified in FIG. 13, pieces of information 0 to 11 for identification of eye position are shown as arranged in a column, and pieces of information P1 to P12 for identification of subpixels are shown as arranged in a row. The eye-position identifying information will be called "index" or "reference index". The table shows whether each of the subpixels that correspond to one eye position is the left subpixel or the right subpixel. The characters "LEFT" and "RIGHT" shown in FIG. 13 designate the left subpixel and the right subpixel, respectively. As described above with reference to FIG. 12, under the condition where the inter-eye distance E conforms with the normal distance, when the left eye assumes a position "0", the right eye assumes a position "0". For this case, the table as exemplified in FIG. 13 indicates that the subpixels P1 to P6 are each the left subpixel, and the subpixels P7 to P12 are each the right subpixel. When the left eye assumes a position "1", the right eye assumes a position "1". For this case, the table indicates that the subpixels P2 to P7 are each the left subpixel, and the subpixels P8 to P12 are each the right subpixel. The controller 8 selects one of the indices 0 to 11. Then, on the basis of subpixel identifying information (P1 to P12) corresponding to the selected index, the controller 8 defines the arrangement of the left-eye images and the right-eye images to be displayed on the display screen of the display panel 5.

The controller 8 causes the display panel 5 to display a parallax image. The display panel 5 includes a plurality of display regions contained in the active area A. The plurality of display regions are in a one-to-one correspondence with the plurality of reference indices. The controller 8 is configured to generate a left-eye image and a right-eye image to be displayed on one display region based on the reference index corresponding to the display region as the reference.

There are heretofore known technologies for carrying out switching between a left-eye image and a right-eye image in a parallax image based on one fixed coordinate system. Unfortunately, in the case where the three-dimensional display device 2 is incorporated in a head-up display, the parallax image being viewed by the user may suffer a distortion attributed to a windshield included in a reflection device for propagation of image light emitted from the display panel to user's eyes. The head-up display is also referred to as HUD (Head-Up Display). The windshield is arcuately shaped, looking down from above in the vertical direction, for reduction in air drag. The reflecting surface of the windshield is made as a free-form surface. Due to the HUD being located on the driver's seat side, the right and left sides, as well as the upper and lower sides, of the windshield have different curvatures, that is; the windshield surface lacks uniformity. From an optical level standpoint, there arise large manufacturing variations in the curvatures of the right and left sides, as well as the upper and lower sides, and, the individual windshields vary greatly in this respect. Although the distortion may be reduced to a certain extent by utilizing an optical element (concave mirror) disposed on an optical path between the three-dimensional display device 2 and user's eyes, some distortion still remains in the parallax image being viewed by the user. The distortion remaining in the parallax image affects parallax-image separation.

The generation processing may include correction processing for reducing a distortion occurring in a parallax image which is viewed by the user. In the correction processing, for image switching in the parallax image on the display screen with a plurality of display regions, instead of being carried out on an entire-screen basis, the switching is carried out on a display region-by-display region basis. The difference in origin point between the display regions translates into the difference in reference index between the display regions in the setting of a uniform origin point. As grounds for this, the shift of different origin points to the uniform origin point causes index change, and, with the index corresponding to the uniform origin point defined as the reference, origin uniformization can be achieved. That is, for successful correction processing, in the screen divided into a plurality of display regions, each display region is assigned a specific reference index, and parallax-image changing operation is carried out with the assigned reference index used as the reference, or, in the screen divided into a plurality of display regions, each display region is assigned a specific shifting origin point, and the shift is carried out on the basis of displacements from the origin point.

For example, the active area A includes a first display region and a second display region. The first display region may be brought into correspondence with a first reference index. The second display region may be brought into correspondence with a second reference index. In the active area A, a single reference index may be brought into correspondence with a plurality of display regions. For example, the first reference index may be brought into correspondence with the first display region and the second display region as well. In other words, a plurality of reference indices are each brought into correspondence with one or a plurality of display regions.

Each reference index corresponds to specific eye positions as shown in FIG. 13, and, for example, "0" serves as a reference index defined as the reference. In the exemplification shown in FIG. 13, each of the first display region and the second display region is assigned 12 indices 0 to 11 (6 to 11, and 0 to 5). Thus, for example, let the left eye be "L" and the right eye be "R", then a synthetic image expressed as a series of letters such as "LLLRRRRRRLL" is generated. In this embodiment, changing of reference index is made on a display region-by-display region basis, and, each display region is assigned a specific reference index independently. For example, the first display region F1 is assigned "0", and the second display region F2 is assigned "6". Upon eye movement, the displacement of eye positions is detected as reference-index change. For example, when the position of the left eye is displaced by an amount equivalent to three subpixels, the displacement is defined as "+3", and, when the position of the right eye is displaced by an amount equivalent to six subpixels, the displacement is defined as "+6". At "+3", the reference index F1 for the first display region is changed from "0" to "3", and, the reference index F2 for the second display region is changed from "6" to "9". Moreover, when the displacement of the left-eye position is defined as "+6", the reference index F1 for the first display region is changed from "0" to "6", and, the reference index F2 for the second display region is changed from "6" to "0" (since the reference index is a duodecimal number, the numerical value of the reference index circulates to "0"). At this time, a synthetic image corresponding to the reference index of "0" is expressed as "LLLRRRRRRLL", a synthetic image corresponding to the reference index of "3" is expressed as "RRRRRRLLLLLL", and a synthetic image corresponding to the reference index of "6" is expressed as "RRRLLLLLLRRR".

The correction processing may be intended to change the arrangement of left-eye images and right-eye images on the basis of any one of the plurality of reference indices, or at least one of the predicted eye position of the left eye and the predicted eye position of the right eye, for each of a plurality of separate display regions within the active area A of the display panel 5 on an individual basis. The plurality of reference indices may be brought into one-to-one correspondence with a plurality of the display regions.

The correction processing may be intended to change the arrangement of left-eye images and right-eye images on the basis of any one of a plurality of shifting origin points for each of a plurality of separate display regions within the active area A of the display panel 5 on an individual basis. The plurality of shifting origin points may be brought into one-to-one correspondence with a plurality of the display regions.

The correction processing may be intended to determine the first visible region based on the predicted eye position of the left eye, and determine the second visible region based on the predicted eye position of the right eye.

The correction processing may be intended to determine the first visible region on the basis of the predicted eye position of the left eye in the vertical direction in parallel with the screen of the display panel 5, and determine the second visible region based on the predicted eye position of the right eye in the vertical direction.

The acquisition section 3 may be configured to acquire a projected first position as the position of the left eye, and acquire a projected second position as the position of the right eye. The projected first position is a position of user's left eye as projected on a plane which is parallel to the screen of the display panel 5 and is spaced by the optimal viewing distance away from the optical element, and the projected second position is a position of user's right eye as projected on the same plane.

Even when the free-form curved surface of a reflecting member such as a windshield serves as a plane of projection of image light, the three-dimensional display device 2 according to this embodiment can generate a left-eye image and a right-eye image based on predicted eye positions of user's eyes (first predicted eye positions), which have been modified in conformity with the curve of the surface on a display region-by-display region basis, with the reference index used as an origin point. Thus, the three-dimensional display device 2 allows the user to view a proper three-dimensional image free from a distortion.

In this embodiment, the controller 8 can determine the left subpixel based on the predicted eye position of the left eye using the table indicating the correspondence between the predicted eye position of the left eye, as well as the predicted eye position of the right eye assumed to be spaced by the normal distance away from the left eye, and an image intended to be displayed via each subpixel. The controller 8 can determine the right subpixel based on the predicted eye position of the right eye using the table. This may eliminate the need for the controller 8 to carry out, at every acquisition of information on the predicted eye positions of user's eyes, computation for determination of the left-eye visible region 51aL and the right-eye visible region 51aR on the basis of eye positions and according to the configuration of the parallax barrier 6 and the display panel 5. Accordingly, the processing load on the controller 8 cab be reduced.

Although there has been shown and described herein a certain embodiment as a representative example, it is apparent to those skilled in the art that many changes and rearrangement of parts are possible within the scope of the invention. That is, the described embodiment is not to be construed as limiting of the invention, and hence various changes and modifications may be made without departing from the scope of the appended claims. For example, a plurality of constituent blocks as shown in the description of the embodiment or practical examples may be combined into one, or a single constituent block may be divided into pieces.

As shown in FIG. 14, the three-dimensional display system 10 may be installed in an HUD 100. The HUD 100 includes the three-dimensional display system 10, an optical member 110, and a projected member 120 having a projected surface 130. The HUD 100 enables image light emitted from the three-dimensional display device 2 to reach the projected member 120 through the optical member 110. The HUD 100 enables the image light reflected from the projected member 120 to reach user's left and right eyes. That is, the HUD 100 enables the image light from the three-dimensional display device 2 to travel along an optical path 140 indicated by dashed lines so as to reach user's left and right eyes. The user is thus able to view a virtual image 150 resulting from the image light which has arrived at his or her eyes through the optical path 140. The HUD 100 may provide stereoscopic vision adapted to user's movements by exercising display control in accordance with the positions of user's left and right eyes.

As shown in FIG. 15, the HUD 100 may be installed in a mobile object 20. Some constituent components of the HUD 100 may be prepared by the shared use of some devices or components of the mobile object 20. For example, in the mobile object 20, its windshield may serve also as the projected member 120. The devices or components of the mobile object 20 for shared use as some constituent components of the HUD 100 may be called "HUD modules".

The display panel 5 is not limited to a transmissive display panel and may thus be of a display panel of other type such as a self-luminous display panel. Examples of the transmissive display panel include, in addition to liquid-crystal panels, MEMS (Micro Electro Mechanical Systems) shutter-based display panels. Examples of the self-luminous display panel include organic EL (electroluminescence) display panels and inorganic EL display panels. The use of a self-luminous display panel for the display panel 5 eliminates the need to use the irradiator 4. In the case where a self-luminous display panel is used for the display panel 5, the parallax barrier 6 is located toward an image light-emitting side of the display panel 5.

The term "mobile object" as used in the present disclosure includes vehicles, ships, and aircraft. The term "vehicle" as used in the present disclosure includes, but is not limited to, motor vehicles and industrial vehicles, and may also include railroad vehicles, domestic vehicles, and fixed-wing airplanes that run on runways. The term "motor vehicle" includes, but is not limited to, passenger automobiles, trucks, buses, motorcycles, and trolleybuses, and may also include other types of vehicles that run on roads. The term "industrial vehicle" includes industrial vehicles for agriculture and industrial vehicles for construction work. The term "industrial vehicle" includes, but is not limited to, forklifts and golf carts. The term "industrial vehicle for agriculture" includes, but is not limited to, tractors, cultivators, transplanters, binders, combines, and lawn mowers. The term "industrial vehicle for construction work" includes, but is not limited to, bulldozers, scrapers, loading shovels, crane vehicles, dump trucks, and road rollers. The term "vehicle" also includes human-powered vehicles. Categorization criteria for vehicles are not limited to the foregoing. For example, the term "motor vehicle" may include industrial vehicles that can run on roads, and, one and the same vehicle may be put in a plurality of categories. The term "ship" as used in the present disclosure includes personal watercraft, boats, and tankers. The term "aircraft" as used in the present disclosure includes fixed-wing airplanes and rotary-wing airplanes.

While, for example, Coordinated Universal Time (UTC) may be used as the basis for "clock time" in the present disclosure, the time standard is not so limited, and use can be made of device's own time standards based on internal clock, for example. The unique time standard is not limited to a specific clock time for synchronization between a plurality of system parts, but may include discrete clock times set specifically for individual parts, and may also include a clock time common to some parts.

Reference Signs List

1: Detection device
2: Three-dimensional display device
3: Acquisition section
4: Irradiator
5: Display panel
6: Parallax barrier
7: Memory
8: Controller
10: Three-dimensional display system
20: Mobile object
51a: Visible region
51aL: Left visible region
51aR: Right visible region
51bL: Left dimming region
51bL: Right dimming region
61: Dimming portion
62: Light-transmitting portion
100: Head-up display
110: Optical member
120: Projected member
130: Projected surface
140: Optical path
150: Virtual image
A: Active area

## Claims

**1.** A three-dimensional display device (2), comprising:

a display panel (5) configured to display a parallax image and emit image light corresponding to the parallax image, including left-eye visible regions (5aL) and left-eye dimming regions (5bL);
a parallax barrier (6) comprising a surface configured to define a direction of the image light;
an acquisition section (3) configured to successively acquire a plurality of pieces of positional data indicating positions of eyes of a user from a detection device (1) which is configured to detect positions of the eyes based on photographed images which are successively acquired from a camera which is configured to image the eyes of the user at imaging time intervals;
a memory (7) configured to store the plurality of pieces of positional data which are successively acquired by the acquisition section (3); and
a controller (8) configured to output predicted eye positions of the eyes as of a time later than a current time based on the plurality of pieces of positional data stored in the memory (7), and cause each of subpixels (P) of the display panel (5) to display the parallax image, based on the predicted eye positions,

**characterized in that** the controller (8) is configured to

carry out, in accordance with a first predicted eye position, generation processing for generating a left-eye image and a right-eye image to be displayed, wherein the generation processing includes correction processing for correcting a distortion occurring in the parallax image to be viewed by the user, and

carry out, in accordance with a second predicted eye position, which is different from the first predicted eye position, synthesis processing for combining the left-eye image and the right-eye image into the parallax image configured to be viewed by the user by causing a plurality of subpixels (P) contained in their respective left-eye visible regions (5aL) to display the left-eye image, and a plurality of subpixels (P) contained in their respective left-eye dimming regions (5bL) to display the right-eye image,

wherein the controller (8) is configured to

acquire the first predicted eye position at a first time, and

acquire the second predicted eye position at a second time,

wherein the first time conforms to a time of initiation of the generation processing by the controller (8) and the second time conforms to a time of initiation of the synthesis processing by the controller (8),

wherein the first predicted eye position corresponds to a first duration between the first time and a time of displaying the parallax image, and

wherein the second predicted eye position corresponds to a second duration between the second time and the time of displaying the parallax image.

**2.** The three-dimensional display device (2) according to claim 1,
wherein the second duration comprises a second time period required for carrying out the synthesis processing.

**3.** The three-dimensional display device (2) according to any one of claims 1 to 2,
wherein the first time differs from the second time.

**4.** The three-dimensional display device (2) according to any one of claims 1 to 3,
wherein the controller (8) is configured to carry out the generation processing and the synthesis processing in different units of processing.

**5.** The three-dimensional display device (2) according to claim 4,
wherein the controller (8) carry out the generation processing on a frame-by-frame basis, and carry out the synthesis processing in a unit of single line or a plurality of lines.

**6.** The three-dimensional display device (2) according to any one of claims 1 to 5,
wherein the controller (8) is configured to calculate a prediction function that indicates a relationship of a time later than a current time with eye positions as of the time, based on the positional data stored in the memory (7), and output predicted eye positions of the eyes based on the prediction function.

**7.** The three-dimensional display device (2) according to claim 6,
wherein the controller (8) is configured to output predicted eye positions of the eyes based on the prediction function at output time intervals shorter than the imaging time intervals, and cause each of the subpixels (P) of the display panel (5) to display the parallax image based on the predicted eye positions.

**8.** The three-dimensional display device (2) according to claim 6 or 7,
wherein the controller (8) is configured to output the predicted eye positions based on the prediction function at output time intervals shorter than display time intervals at which images to be displayed on the display panel (5) are updated.

**9.** A three-dimensional display system (10), comprising:

the three-dimensional display device (2) according to any one of claims 1 to 8, and

the detection device (1),

the detection device (1) detecting positions of eyes of the user based on photographed images which are successively acquired from the camera which images the eyes of the user at imaging time intervals.

**10.** A head-up display (100), comprising:

the three-dimensional display system (10) according to claim 9; and

a projected member (120),

the projected member (120) reflecting the image light emitted from the three-dimensional display device (2), in a direction toward the eyes of the user.

**11.** A mobile object (20), comprising:
the head-up display (100) according to claim 10.

**Patentansprüche**

1. Dreidimensionale Anzeigevorrichtung (2), umfassend:

   ein Anzeigefeld (5), das konfiguriert ist zum Anzeigen eines Parallaxenbildes und zum Abstrahlen eines Bildlichts, das dem Parallaxenbild entspricht, das sichtbare Bereiche für das linke Auge (5aL) und Abdunklungsbereiche für das linke Auge (5bL) beinhaltet;
   eine Parallaxenbarriere (6), die eine Oberfläche umfasst, die konfiguriert ist zum Definieren einer Richtung des Bildlichts;
   einen Erfassungssektor (3), der konfiguriert ist zum sukzessiven Erfassen einer Vielzahl von Bestandteilen von Positionsdaten, die Positionen der Augen eines Benutzers von einer Erkennungsvorrichtung (1) anzeigen, die konfiguriert ist zum Erkennen von Positionen der Augen basierend auf fotografierten Bildern, die sukzessive von einer Kamera erfasst werden, die konfiguriert ist zum Abbilden der Augen des Benutzers in Bilderfassungszeitintervallen;
   einen Speicher (7), der konfiguriert ist zum Speichern der Vielzahl von Bestandteilen von Positionsdaten, die sukzessive durch den Erfassungssektor (3) erfasst werden; und
   eine Steuereinheit (8), die konfiguriert ist zum Ausgeben von vorhergesagten Augenpositionen der Augen für einen Zeitpunkt, der später als ein aktueller Zeitpunkt ist, basierend auf der Vielzahl von Bestandteilen der Positionsdaten, die in dem Speicher (7) gespeichert sind, und zum Veranlassen von jedem der Subpixel (P) des Anzeigefeldes (5), damit sie das Parallaxenbild basierend auf den vorhergesagten Augenpositionen anzeigen,
   **dadurch gekennzeichnet, dass** die Steuereinheit (8) konfiguriert ist zum:

      Ausführen, gemäß einer ersten vorhergesagten Augenposition, einer Erzeugungsverarbeitung zum Erzeugen eines anzuzeigenden Bildes für das linke Auge und eines anzuzeigenden Bildes für das rechte Auge, wobei die Erzeugungsverarbeitung eine Korrekturverarbeitung zum Korrigieren einer Verzerrung beinhaltet, die in dem durch den Benutzer zu betrachtenden Parallaxenbild auftritt, und
      Ausführen, gemäß einer zweiten vorhergesagten Augenposition, die verschieden von der ersten vorhergesagten Augenposition ist, einer Syntheseverarbeitung zum Kombinieren des Bildes für das linke Auge und des Bildes für das rechte Auge in das Parallaxenbild, das konfiguriert ist, um von dem Benutzer betrachtet zu werden, indem eine Vielzahl von Subpixeln (P), die in ihren jeweiligen sichtbaren Bereichen für das linke Auge (5aL) enthalten sind, veranlasst wird, das Bild für das linke Auge anzuzeigen, und eine Vielzahl von Subpixeln (P), die in ihren jeweiligen Abdunklungsbereichen für das linke Auge (5bL) enthalten sind, veranlasst wird, das Bild für das rechte Auge anzuzeigen,
      wobei die Steuereinheit (8) konfiguriert ist zum
      Erfassen der ersten vorhergesagten Augenposition zu einem ersten Zeitpunkt und zum
      Erfassen der zweiten vorhergesagten Augenposition zu einem zweiten Zeitpunkt,
      wobei der erste Zeitpunkt einem Zeitpunkt einer Initiierung der Erzeugungsverarbeitung durch die Steuereinheit (8) entspricht und der zweite Zeitpunkt einem Zeitpunkt einer Initiierung der Syntheseverarbeitung durch die Steuereinheit (8) entspricht,
      wobei die erste vorhergesagte Augenposition einer ersten Dauer zwischen dem ersten Zeitpunkt und einem Zeitpunkt des Anzeigens des Parallaxenbildes entspricht, und
      wobei die zweite vorhergesagte Augenposition einer zweiten Dauer zwischen dem zweiten Zeitpunkt und dem Zeitpunkt des Anzeigens des Parallaxenbildes entspricht.

2. Dreidreidimensionale Anzeigevorrichtung (2) nach Anspruch 1,
   wobei die zweite Dauer einen zweiten Zeitraum umfasst, der erforderlich ist zum Ausführen der Syntheseverarbeitung.

3. Dreidimensionale Anzeigevorrichtung (2) nach einem der Ansprüche 1 bis 2,
   wobei der erste Zeitpunkt verschieden von dem zweiten Zeitpunkt ist.

4. Dreidimensionale Anzeigevorrichtung (2) nach einem der Ansprüche 1 bis 3,
   wobei die Steuereinheit (8) konfiguriert ist zum Ausführen der Erzeugungsverarbeitung und der Syntheseverarbeitung in unterschiedlichen Verarbeitungseinheiten.

5. Dreidreidimensionale Anzeigevorrichtung (2) nach Anspruch 4,
   wobei die Steuereinheit (8) die Erzeugungsverarbeitung auf einer einzelbildweisen Grundlage ausführt und die Syntheseverarbeitung in einer Einheit einer einzelnen Zeile oder einer Vielzahl von Zeilen ausführt.

6. Dreidimensionale Anzeigevorrichtung (2) nach einem der Ansprüche 1 bis 5,
wobei die Steuereinheit (8) konfiguriert ist zum Berechnen einer Vorhersagefunktion, die eine Beziehung eines Zeitpunkts, der später als ein aktueller Zeitpunkt ist, mit Augenpositionen ab diesem Zeitpunkt basierend auf den Positionsdaten anzeigt, die in dem Speicher (7) gespeichert sind, und zum Ausgeben von vorhergesagten Augenpositionen der Augen basierend auf der Vorhersagefunktion.

7. Dreidreidimensionale Anzeigevorrichtung (2) nach Anspruch 6,
wobei die Steuereinheit (8) konfiguriert ist zum Ausgeben von vorhergesagten Augenpositionen basierend auf der Vorhersagefunktion in Ausgabezeitintervallen, die kürzer als die Bilderfassungszeitintervalle sind, und Veranlassen von jedem der Subpixel (P) des Anzeigefeldes (5), dass sie das Parallaxenbild basierend auf den vorhergesagten Augenpositionen anzeigen.

8. Dreidreidimensionale Anzeigevorrichtung (2) nach Anspruch 6 oder 7,
wobei die Steuereinheit (8) konfiguriert ist zum Ausgeben der vorhergesagten Augenpositionen basierend auf der Vorhersagefunktion in Ausgabezeitintervallen, die kürzer als die Anzeigezeitintervalle sind, in denen die in dem Anzeigefeld anzuzeigenden Bilder aktualisiert werden.

9. Dreidimensionales Anzeigesystem (10), umfassend:

die dreidimensionale Anzeigevorrichtung (2) nach einem der Ansprüche 1 bis 8, und
die Erkennungsvorrichtung (1)
wobei die Erkennungsvorrichtung (1) Positionen von Augen des Benutzers basierend auf fotografierten Bildern erkennt, die sukzessive von der Kamera erfasst werden, welche die Augen des Benutzers in Bilderfassungszeitintervallen abbildet.

10. Frontscheibenanzeige (100), umfassend:

das dreidreidimensionale Anzeigesystem (10) nach Anspruch 9; und
einen projizierten Gegenstand (120),
wobei der projizierte Gegenstand (120) das Bildlicht reflektiert, das von der dreidimensionalen Anzeigevorrichtung (2) in einer Richtung auf die Augen des Benutzers abgestrahlt wird.

11. Mobiles Objekt (20), umfassend:
die Frontscheibenanzeige (100) nach Anspruch 10.

**Revendications**

1. Dispositif d'affichage tridimensionnel (2), comprenant :

un panneau d'affichage (5) configuré pour afficher une image de parallaxe et émettre une lumière d'image correspondant à l'image de parallaxe, incluant des régions visibles par l'œil gauche (5aL) et des régions de gradation d'œil gauche (5bL) ;
une barrière de parallaxe (6) comprenant une surface configurée pour définir une direction de la lumière d'image ;
une section d'acquisition (3) configurée pour acquérir de manière successive une pluralité d'éléments de données de position indiquant les positions des yeux d'un utilisateur à partir d'un dispositif de détection (1) qui est configuré pour détecter les positions des yeux sur la base d'images photographiées qui sont acquises de manière successive à partir d'une caméra qui est configurée pour imager les yeux de l'utilisateur à des intervalles temporels d'imagerie ;
une mémoire (7) configurée pour stocker la pluralité d'éléments de données de position qui sont acquis de manière successive par la section d'acquisition (3) ; et
un contrôleur (8) configuré pour émettre des positions de l'œil prédites des yeux comme un moment ultérieur par rapport à un moment actuel sur la base de la pluralité d'éléments de données de position stockées dans la mémoire (7), et amener chacun des sous-pixels (P) du panneau d'affichage (5) à afficher l'image de parallaxe, sur la base des positions de l'œil prédites,
**caractérisé en ce que** le contrôleur (8) est configuré pour
mettre en œuvre, en fonction d'une première position de l'œil prédite, la génération d'un traitement pour générer une image d'œil gauche et une image d'œil droit à afficher, le traitement de génération incluant un traitement de correction pour corriger une distorsion se produisant dans l'image de parallaxe à visualiser par l'utilisateur, et
mettre en œuvre, en fonction d'une deuxième position de l'œil prédite, qui est différente de la première position de l'œil prédite, un traitement de synthèse pour combiner l'image d'œil gauche et l'image d'oeil droit dans l'image de parallaxe configurée pour être vue par l'utilisateur en amenant une pluralité de sous-pixels (P) contenus dans leurs régions visibles par l'œil gauche respectives (5aL) à afficher l'image d'œil gauche, et une pluralité de sous-pixels (P) contenus dans leurs régions de gradation d'œil gauche respectives (5bL) à afficher l'image d'œil droit,

le contrôleur (8) étant configuré pour :

acquérir la première position d'œil prédite à un premier moment, et
acquérir la deuxième position d'œil prédite à un deuxième moment,
le premier moment étant conforme à un moment d'initiation du traitement de génération par le contrôleur (8) et le deuxième moment étant conforme à un moment d'initiation du traitement de synthèse par le contrôleur (8),
la première position d'œil prédite correspondant à une première durée entre le premier moment et un moment d'affichage de l'image de parallaxe, et
la deuxième position d'œil prédite correspondant à une deuxième durée entre le premier moment et le moment d'affichage de l'image de parallaxe.

**2.** Dispositif d'affichage tridimensionnel (2) selon la revendication 1, la deuxième durée comprenant une deuxième période de temps requise pour mettre en œuvre le traitement de synthèse.

**3.** Dispositif d'affichage tridimensionnel (2) selon l'une quelconque des revendications 1 à 2, le premier moment étant différent du deuxième moment.

**4.** Dispositif d'affichage tridimensionnel (2) l'une quelconque des revendications 1 à 3, le contrôleur (8) étant configuré pour mettre en œuvre le traitement de génération et le traitement de synthèse dans différentes unités de traitement.

**5.** Dispositif d'affichage tridimensionnel (2) selon la revendication 4, le contrôleur (8) mettant en œuvre le traitement de génération sur une base de trame par trame, et acheminant le traitement de synthèse dans une unité d'une seule ligne ou d'une pluralité de lignes.

**6.** Dispositif d'affichage tridimensionnel (2) selon l'une quelconque des revendications 1 à 5, le contrôleur (8) étant configuré pour calculer une fonction de prédiction qui indique un rapport d'un moment ultérieur par rapport à un moment actuel avec des positions d'œil comme ce moment, sur la base des données de position stockées dans la mémoire (7), et émettre des positions d'œil prédites des yeux sur la base de la fonction de prédiction.

**7.** Dispositif d'affichage tridimensionnel (2) selon la revendication 6, le contrôleur (8) étant configuré pour émettre des positions d'œil prédites des yeux sur la base de la fonction de prédiction à des intervalles temporels de sortie plus courts que les intervalles temporels d'imagerie, et amener chacun des sous-pixels (P) du panneau d'affichage (5) à afficher l'image de parallaxe sur la base des positions d'œil prédites.

**8.** Dispositif d'affichage tridimensionnel (2) selon la revendication 6 ou 7, le contrôleur (8) étant configuré pour émettre les positions d'œil prédites sur la base de la fonction de prédiction à des intervalles temporels de sortie plus courts que des intervalles temporels d'affichage auxquels des images à afficher sur le panneau d'affichage (5) sont mises à jour.

**9.** Système d'affichage tridimensionnel (10), comprenant :

le dispositif d'affichage tridimensionnel (2) selon l'une quelconque des revendications 1 à 8, et
le dispositif de détection (1),
le dispositif de détection (1) détectant les positions des yeux de l'utilisateur sur la base d'images photographiées qui sont acquises de manière successive à partir de la caméra qui image les yeux de l'utilisateur à des intervalles temporels d'imagerie.

**10.** Affichage tête haute (100), comprenant :

le système d'affichage tridimensionnel (10) selon la revendication 9 ; et
un élément projeté (120),
l'élément projeté (120) reflétant la lumière d'image émise à partir du dispositif d'affichage tridimensionnel (2), dans une direction allant vers les yeux de l'utilisateur.

**11.** Objet mobile (20), comprenant :
l'affichage tête haute (100) selon la revendication 10.

FIG. 1

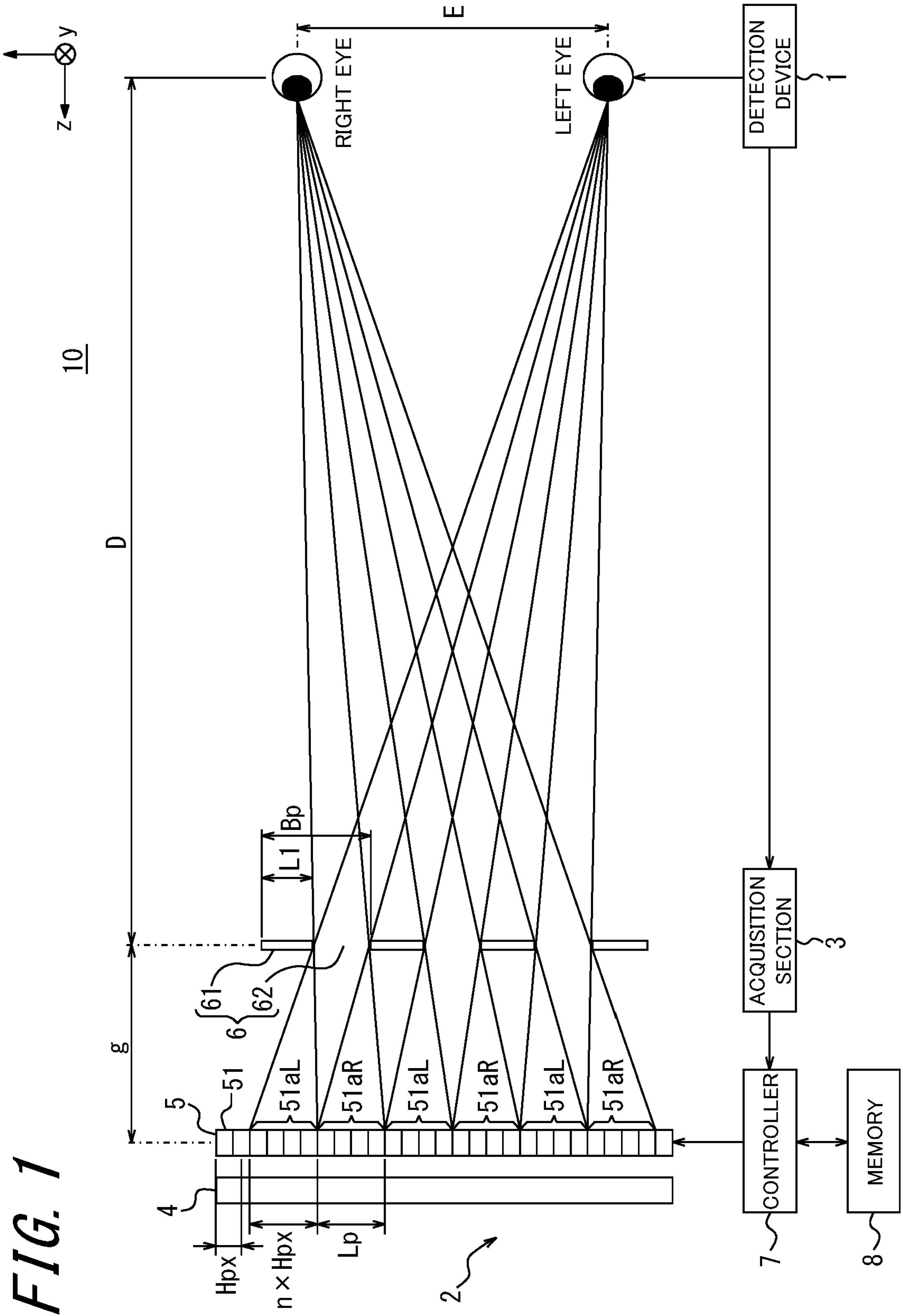
10
x
y
z
E
RIGHT EYE
LEFT EYE
DETECTION DEVICE
1
D
g
Bp
L1
61
62
6
5
51
51aL
51aR
4
Hpx
n × Hpx
Lp
2
ACQUISITION SECTION
3
CONTROLLER
7
MEMORY
8

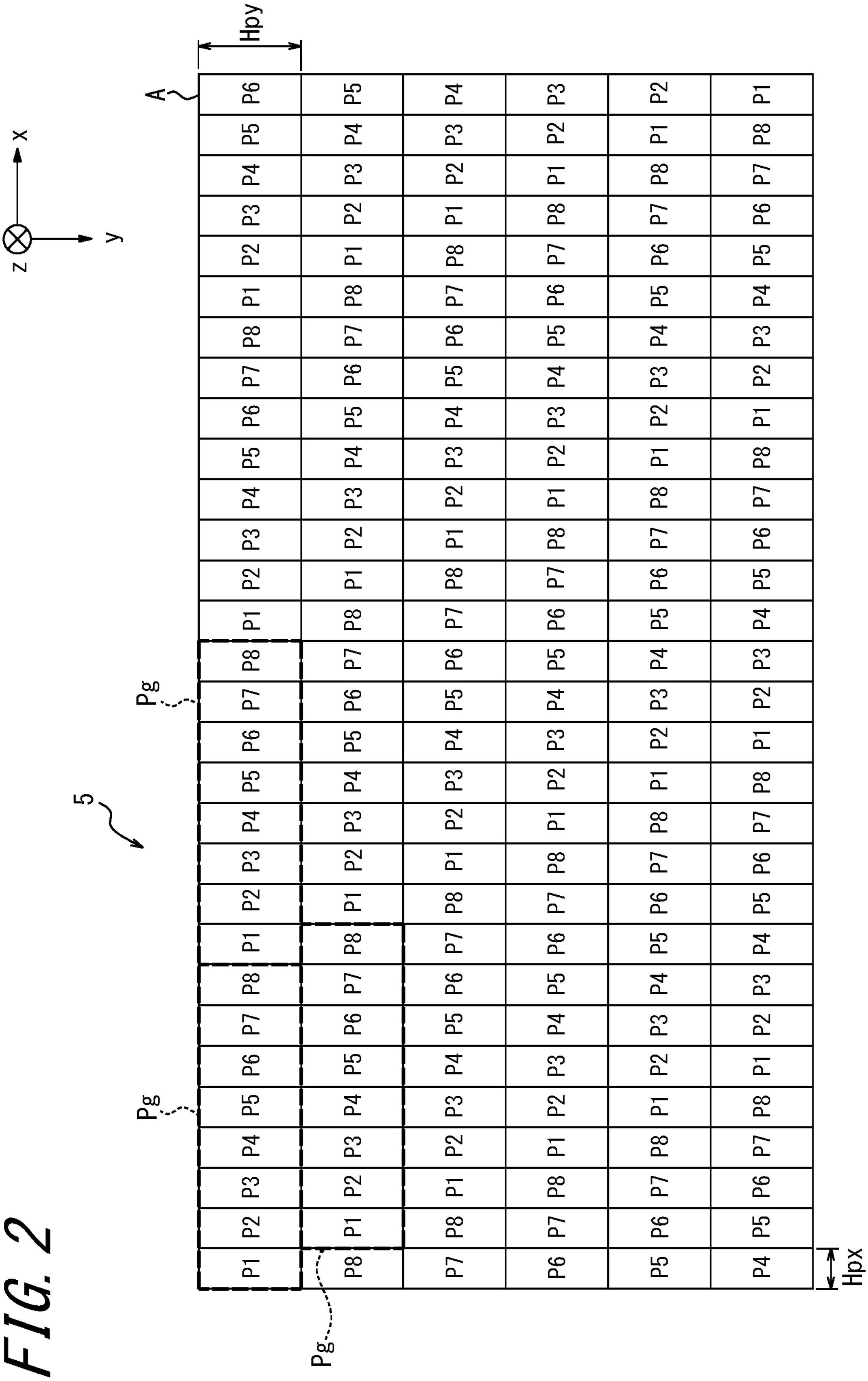


FIG. 2

FIG. 3

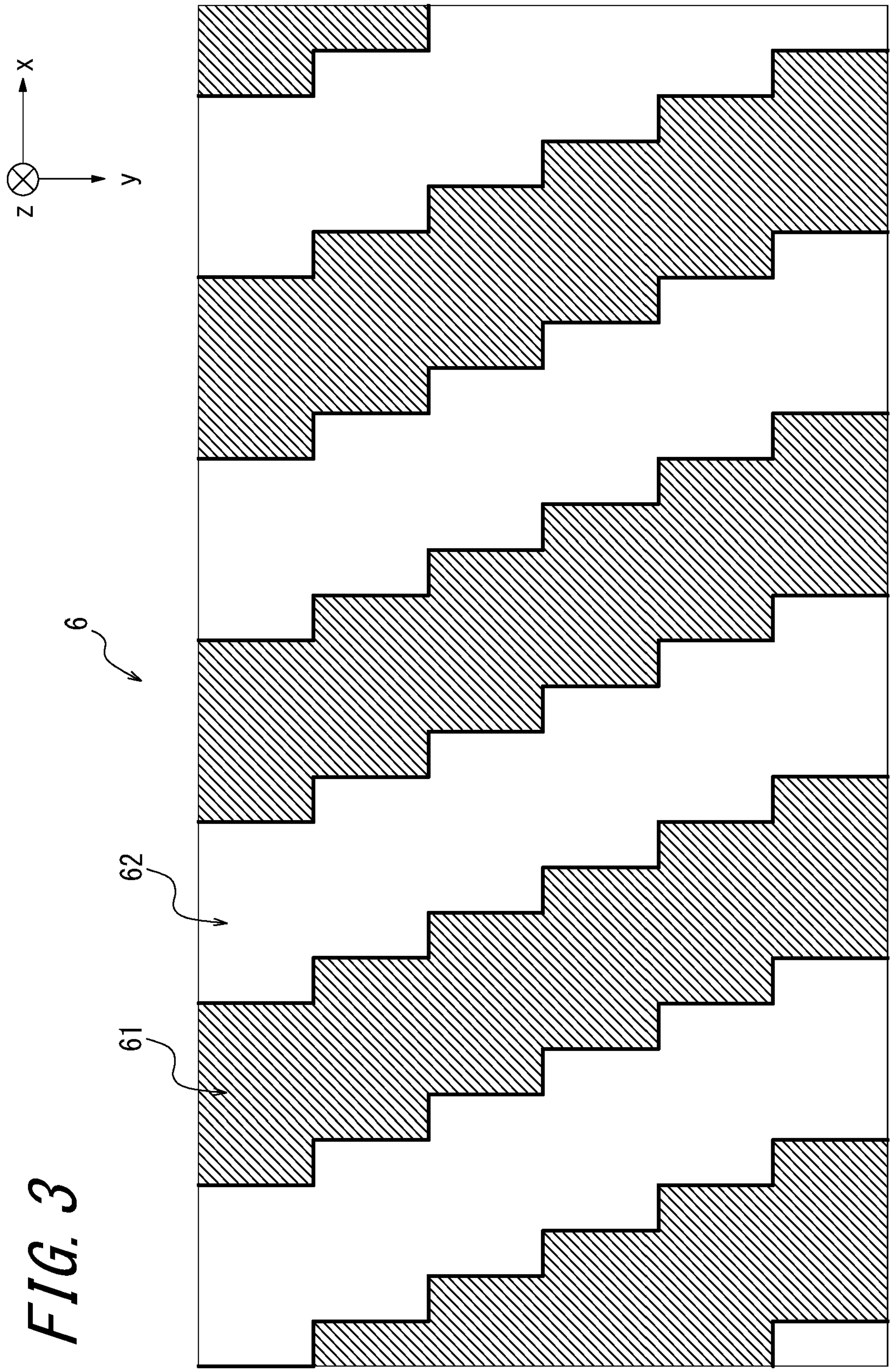

FIG. 4

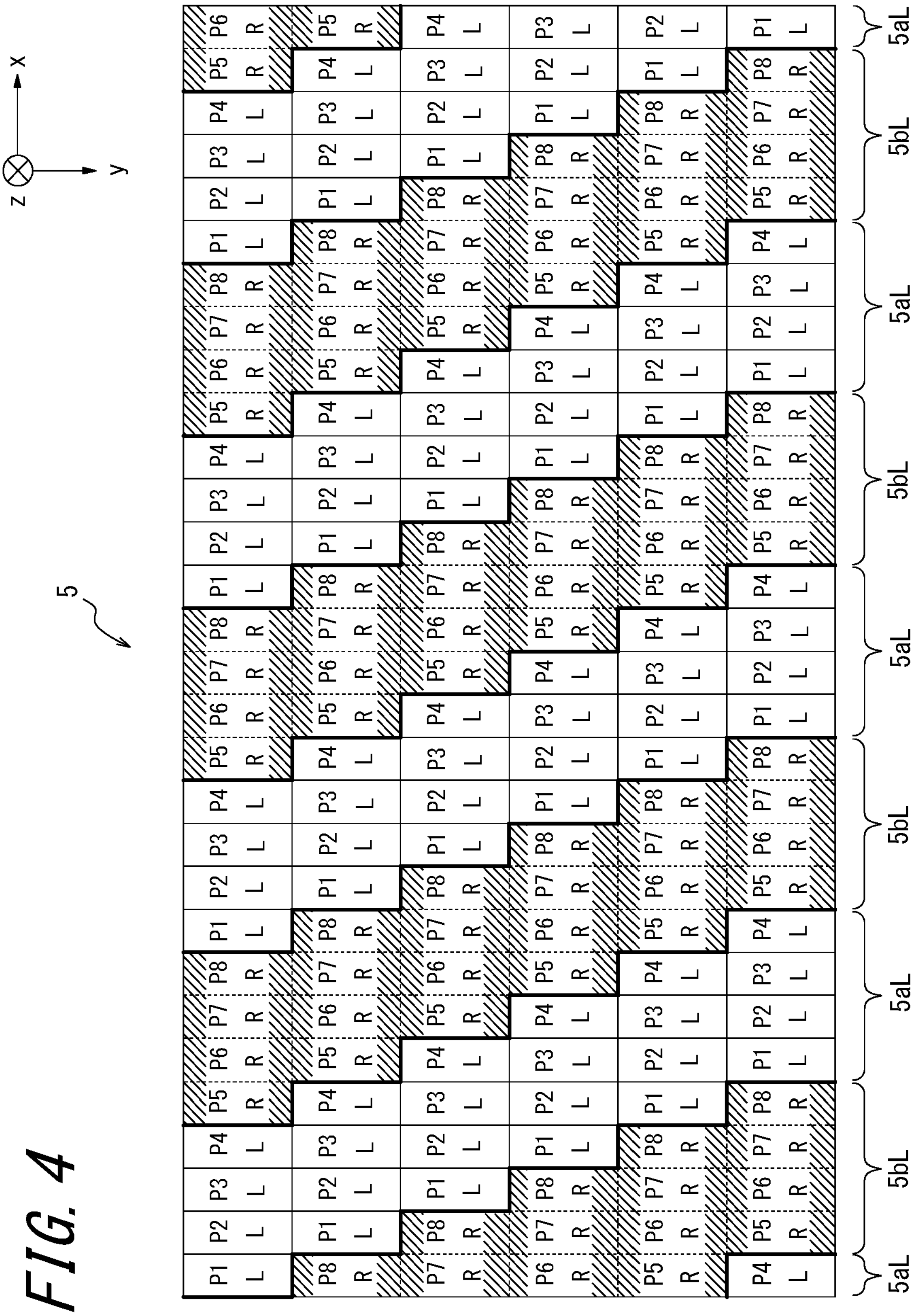

FIG. 5

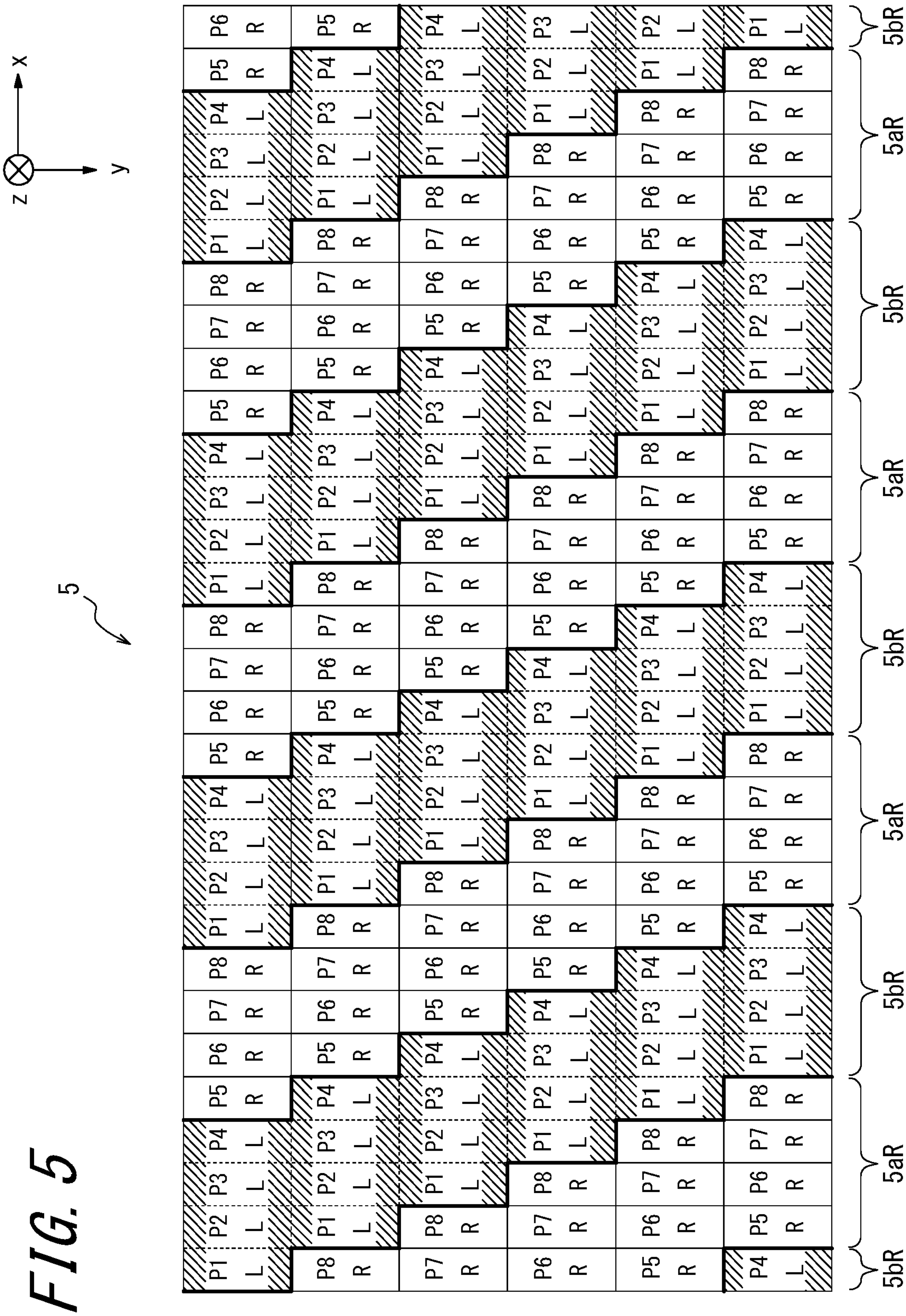

FIG. 6

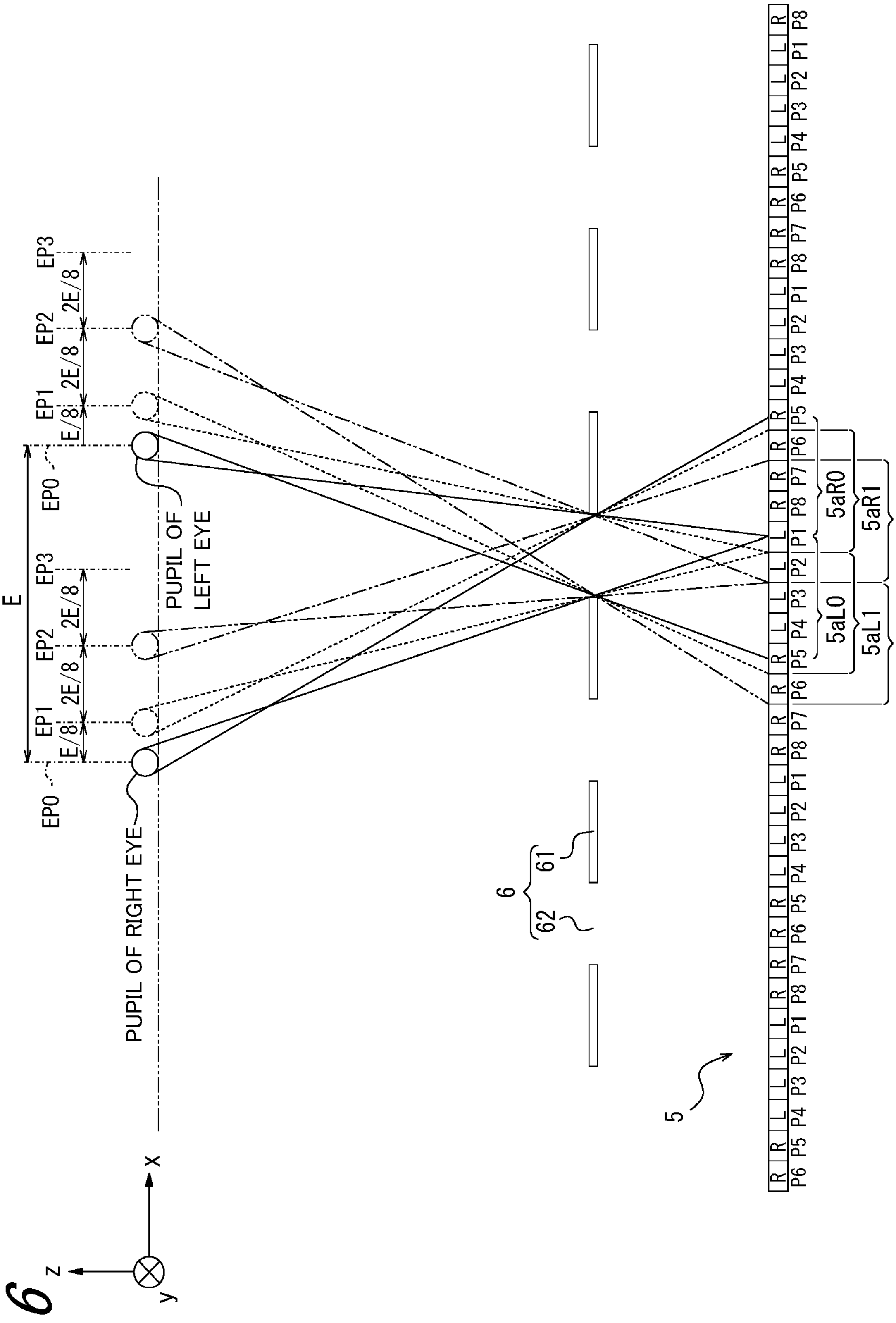
E
EP0
EP1
EP2
EP3
E/8
2E/8
PUPIL OF LEFT EYE
PUPIL OF RIGHT EYE
6
61
62
5
5aR0
5aR1
5aR2
5aL0
5aL1
5aL2
x
y
z

FIG. 7

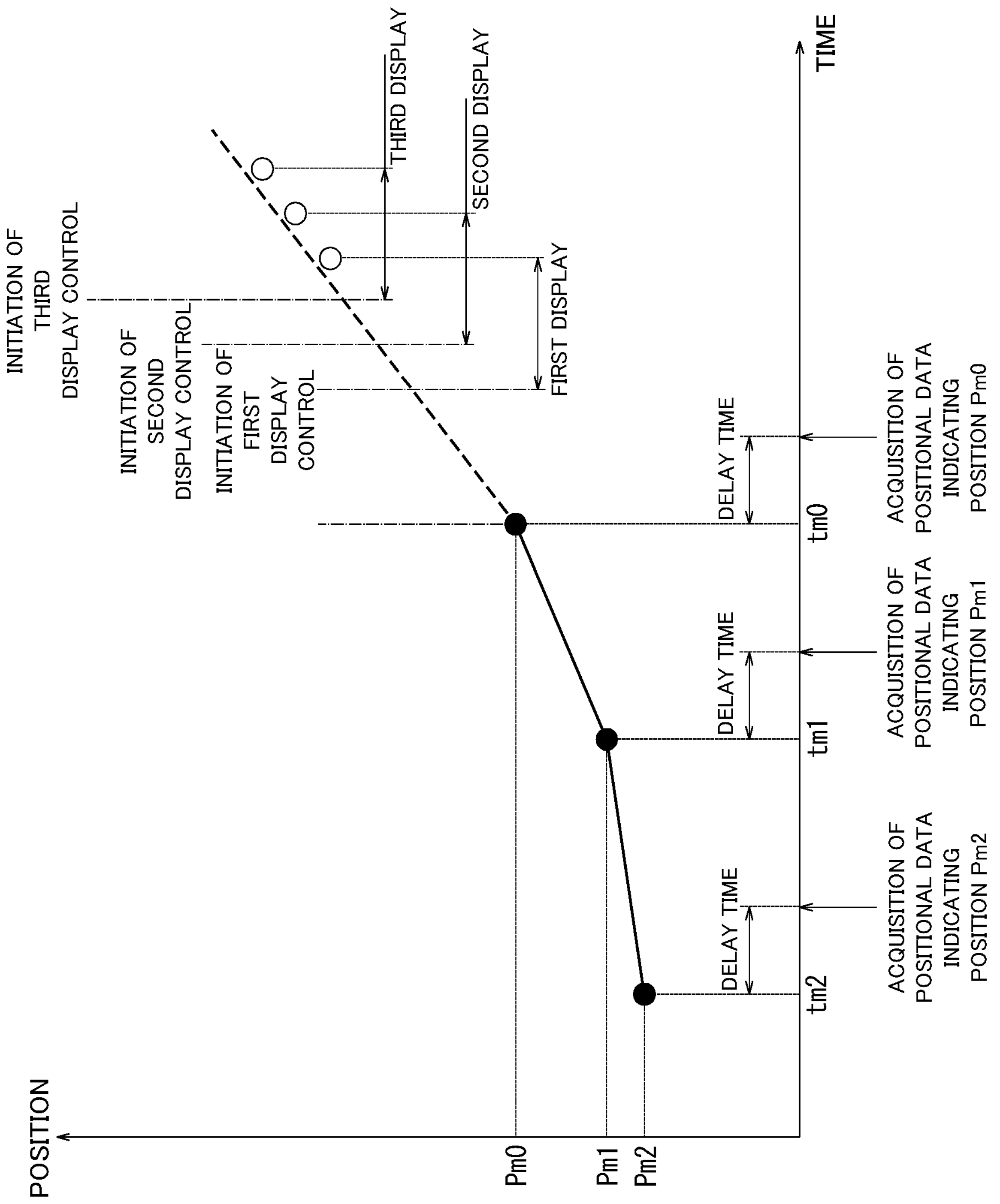
POSITION
TIME
Pm0
Pm1
Pm2
tm0
tm1
tm2
DELAY TIME
DELAY TIME
DELAY TIME
ACQUISITION OF POSITIONAL DATA INDICATING POSITION Pm0
ACQUISITION OF POSITIONAL DATA INDICATING POSITION Pm1
ACQUISITION OF POSITIONAL DATA INDICATING POSITION Pm2
INITIATION OF THIRD DISPLAY CONTROL
INITIATION OF SECOND DISPLAY CONTROL
INITIATION OF FIRST DISPLAY CONTROL
THIRD DISPLAY
SECOND DISPLAY
FIRST DISPLAY

FIG. 8

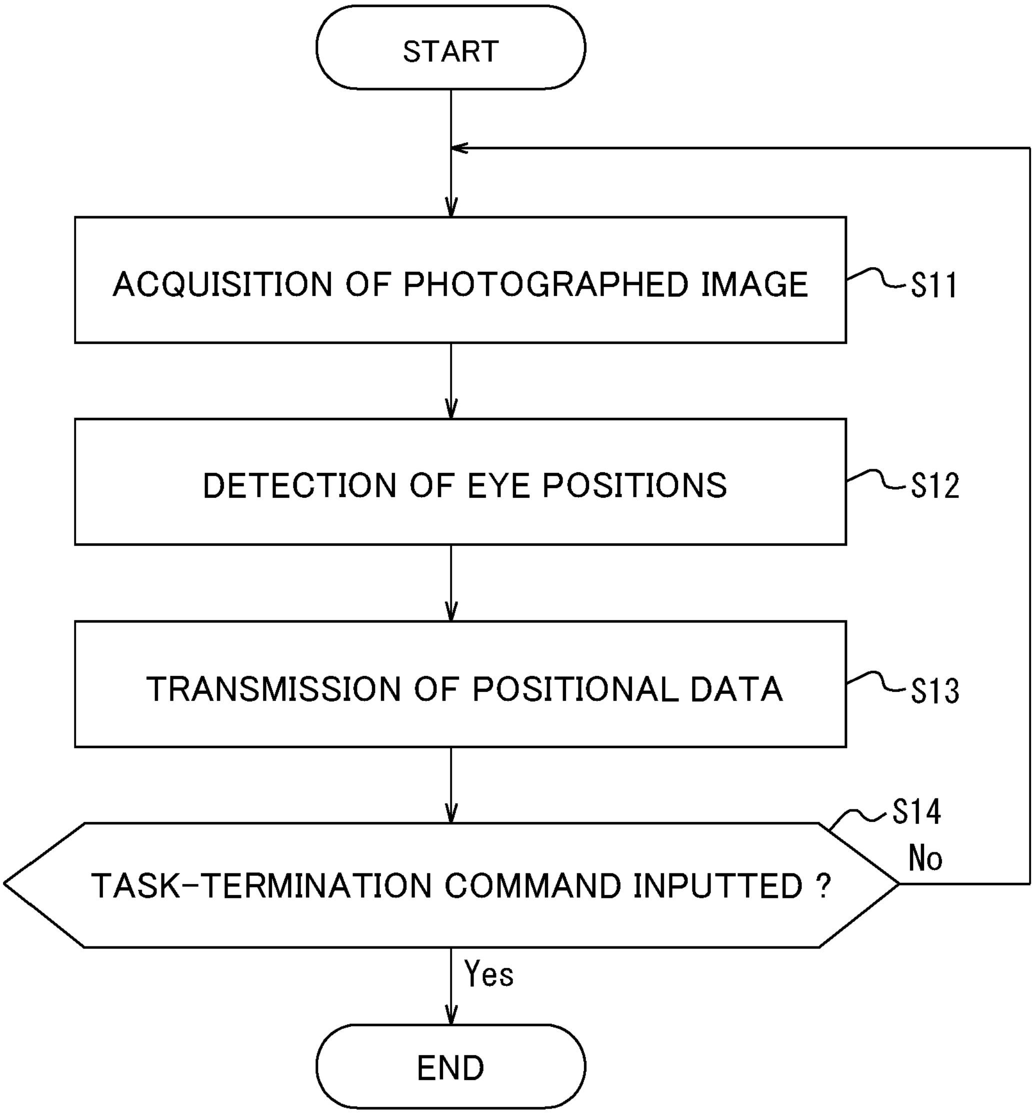
START
ACQUISITION OF PHOTOGRAPHED IMAGE
S11
DETECTION OF EYE POSITIONS
S12
TRANSMISSION OF POSITIONAL DATA
S13
S14
No
TASK-TERMINATION COMMAND INPUTTED ?
Yes
END

FIG. 9

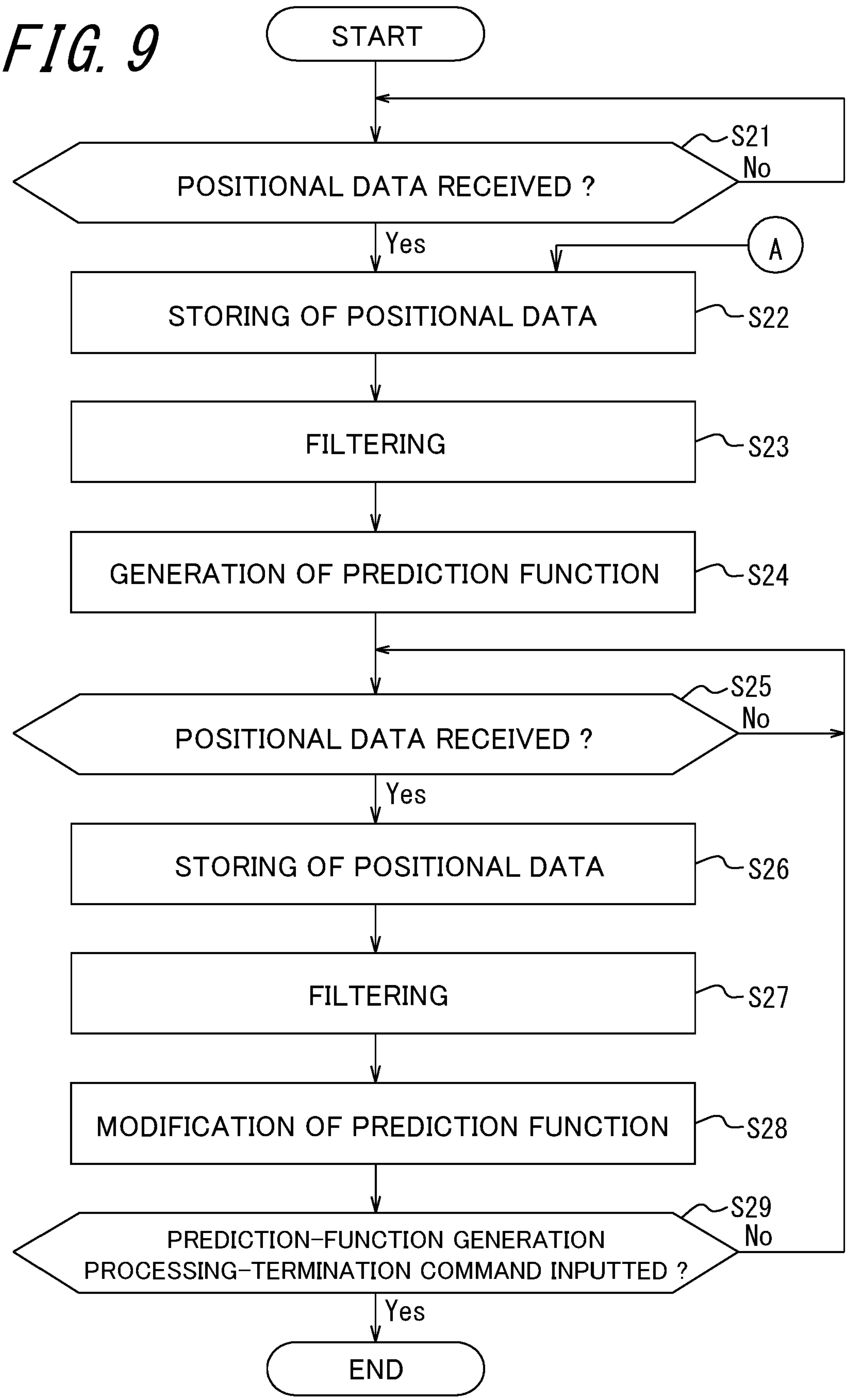
START
S21
POSITIONAL DATA RECEIVED ?
No
Yes
A
STORING OF POSITIONAL DATA
S22
FILTERING
S23
GENERATION OF PREDICTION FUNCTION
S24
S25
POSITIONAL DATA RECEIVED ?
No
Yes
STORING OF POSITIONAL DATA
S26
FILTERING
S27
MODIFICATION OF PREDICTION FUNCTION
S28
S29
PREDICTION-FUNCTION GENERATION PROCESSING-TERMINATION COMMAND INPUTTED ?
No
Yes
END

FIG. 10

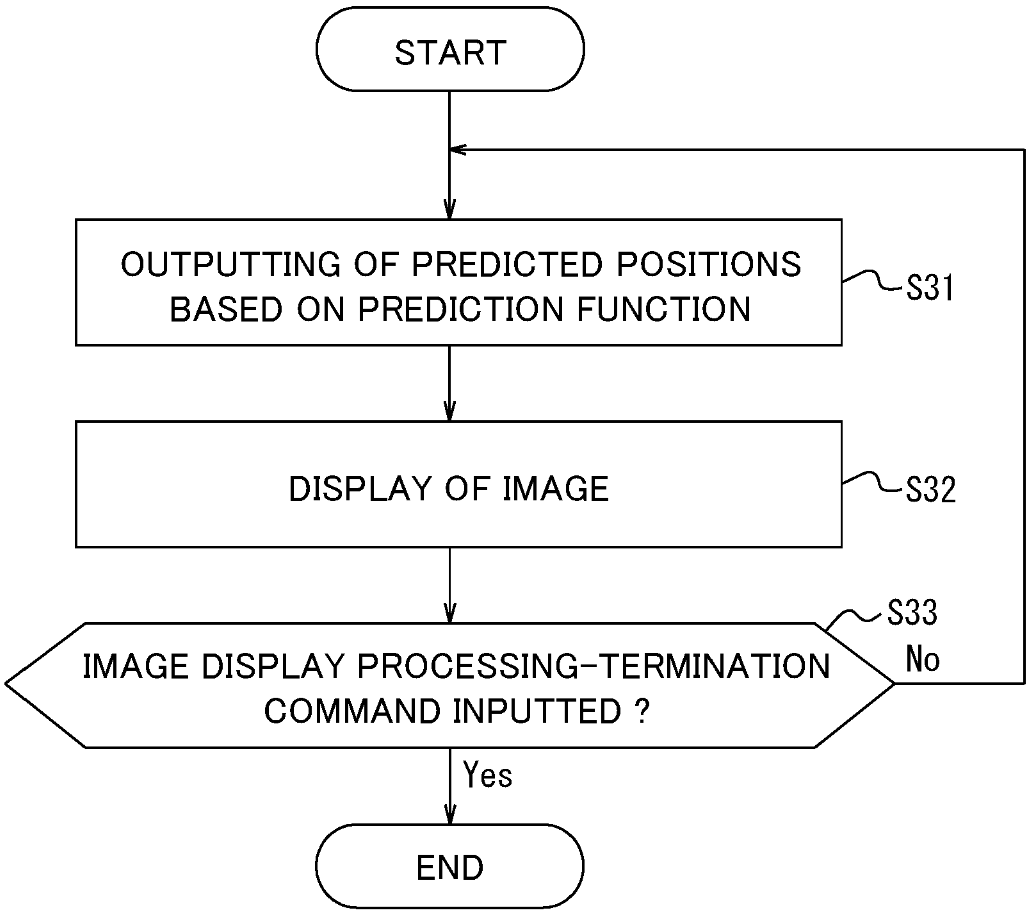
START
OUTPUTTING OF PREDICTED POSITIONS BASED ON PREDICTION FUNCTION
S31
DISPLAY OF IMAGE
S32
S33
IMAGE DISPLAY PROCESSING-TERMINATION COMMAND INPUTTED ?
No
Yes
END

FIG. 11

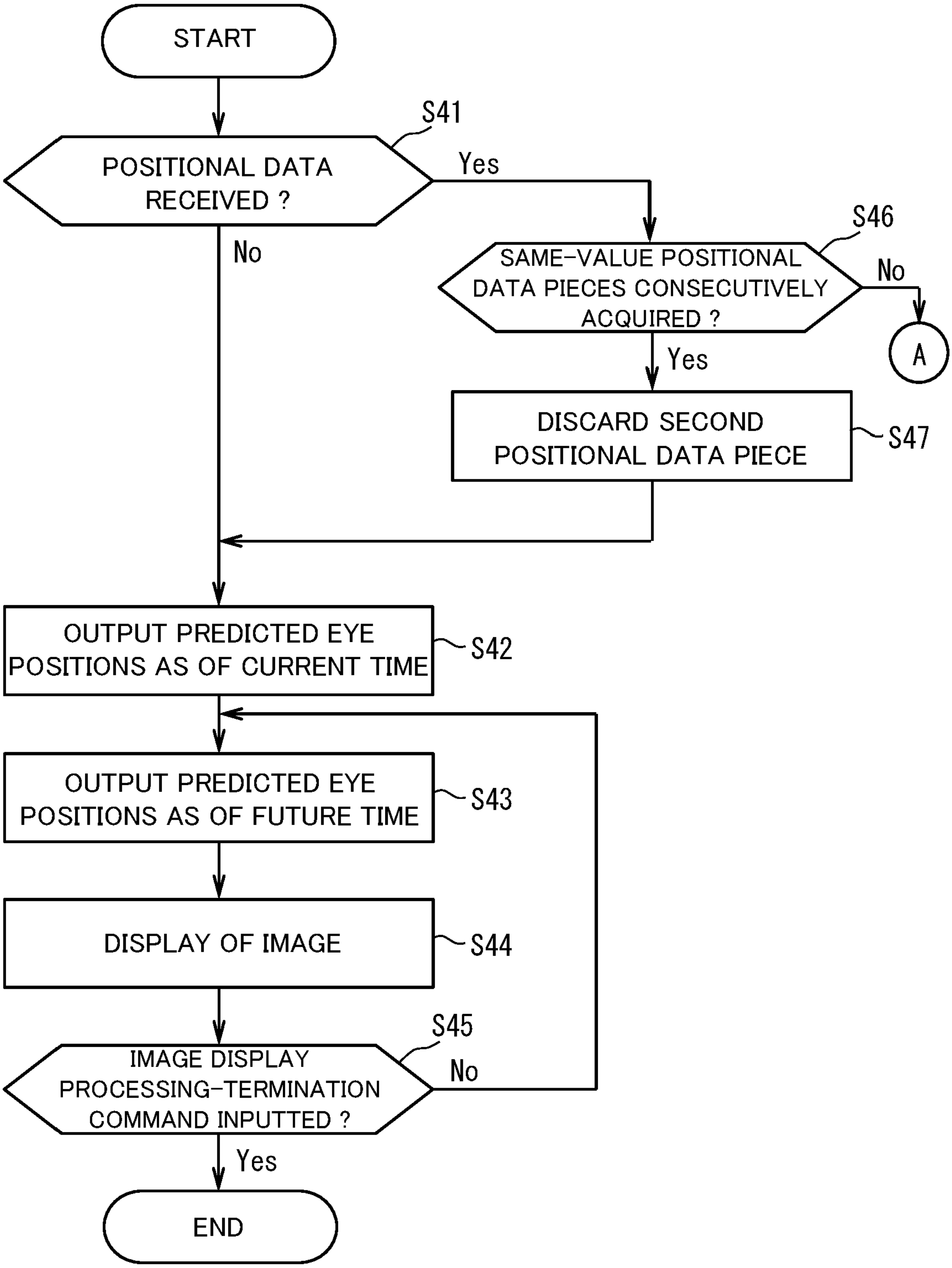
START
S41
POSITIONAL DATA RECEIVED ?
Yes
No
S46
SAME-VALUE POSITIONAL DATA PIECES CONSECUTIVELY ACQUIRED ?
No
A
Yes
DISCARD SECOND POSITIONAL DATA PIECE
S47
OUTPUT PREDICTED EYE POSITIONS AS OF CURRENT TIME
S42
OUTPUT PREDICTED EYE POSITIONS AS OF FUTURE TIME
S43
DISPLAY OF IMAGE
S44
S45
IMAGE DISPLAY PROCESSING-TERMINATION COMMAND INPUTTED ?
No
Yes
END

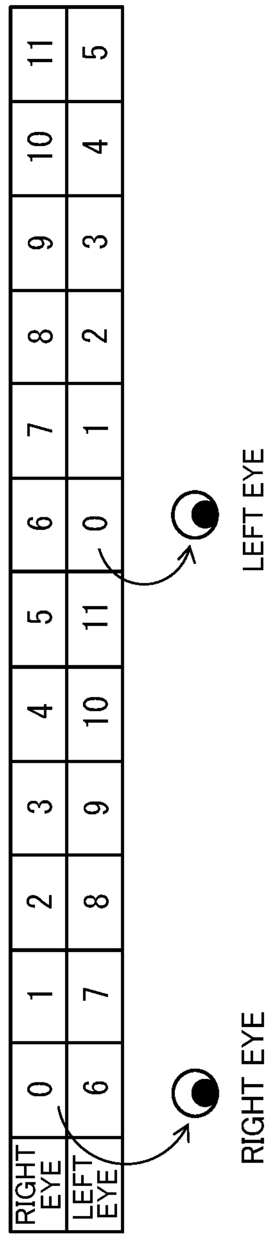
RIGHT EYE
LEFT EYE
RIGHT EYE 0 1 2 3 4 5 6 7 8 9 10 11
LEFT EYE 6 7 8 9 10 11 0 1 2 3 4 5
RIGHT EYE
LEFT EYE

FIG. 12

FIG. 13

| | P1 | P2 | P3 | P4 | P5 | P6 | P7 | P8 | P9 | P10 | P11 | P12 |
|---|---|---|---|---|---|---|---|---|---|---|---|---|
| 0 | LEFT | LEFT | LEFT | LEFT | LEFT | LEFT | RIGHT | RIGHT | RIGHT | RIGHT | RIGHT | RIGHT |
| 1 | RIGHT | LEFT | LEFT | LEFT | LEFT | LEFT | LEFT | RIGHT | RIGHT | RIGHT | RIGHT | RIGHT |
| 2 | RIGHT | RIGHT | LEFT | LEFT | LEFT | LEFT | LEFT | LEFT | RIGHT | RIGHT | RIGHT | RIGHT |
| 3 | RIGHT | RIGHT | RIGHT | LEFT | LEFT | LEFT | LEFT | LEFT | LEFT | RIGHT | RIGHT | RIGHT |
| 4 | RIGHT | RIGHT | RIGHT | RIGHT | LEFT | LEFT | LEFT | LEFT | LEFT | LEFT | RIGHT | RIGHT |
| 5 | RIGHT | RIGHT | RIGHT | RIGHT | RIGHT | LEFT | LEFT | LEFT | LEFT | LEFT | LEFT | RIGHT |
| 6 | RIGHT | RIGHT | RIGHT | RIGHT | RIGHT | RIGHT | LEFT | LEFT | LEFT | LEFT | LEFT | LEFT |
| 7 | LEFT | RIGHT | RIGHT | RIGHT | RIGHT | RIGHT | RIGHT | LEFT | LEFT | LEFT | LEFT | LEFT |
| 8 | LEFT | LEFT | RIGHT | RIGHT | RIGHT | RIGHT | RIGHT | RIGHT | LEFT | LEFT | LEFT | LEFT |
| 9 | LEFT | LEFT | LEFT | RIGHT | RIGHT | RIGHT | RIGHT | RIGHT | RIGHT | LEFT | LEFT | LEFT |
| 10 | LEFT | LEFT | LEFT | LEFT | RIGHT | RIGHT | RIGHT | RIGHT | RIGHT | RIGHT | LEFT | LEFT |
| 11 | LEFT | LEFT | LEFT | LEFT | LEFT | RIGHT | RIGHT | RIGHT | RIGHT | RIGHT | RIGHT | LEFT |

FIG. 14

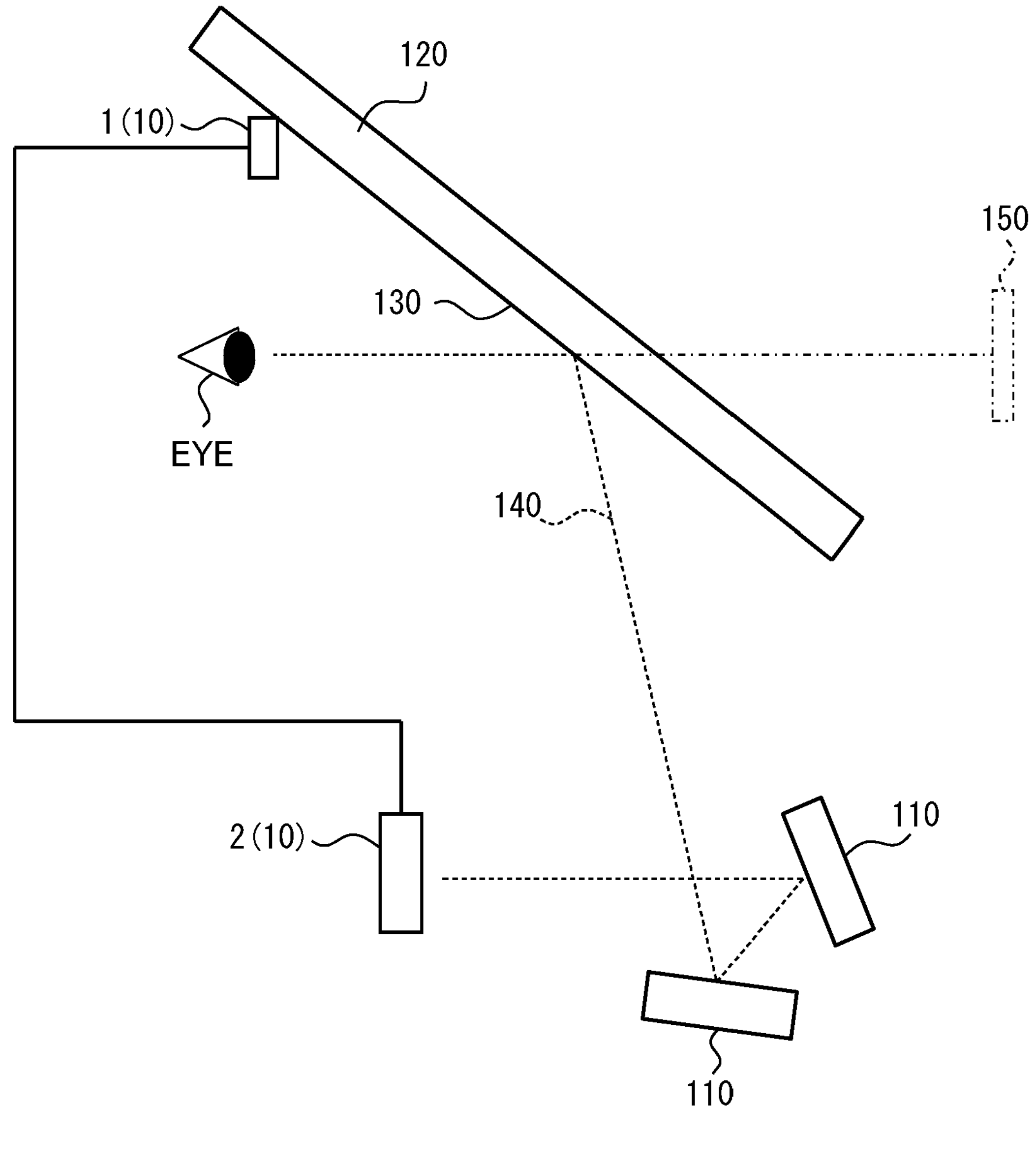

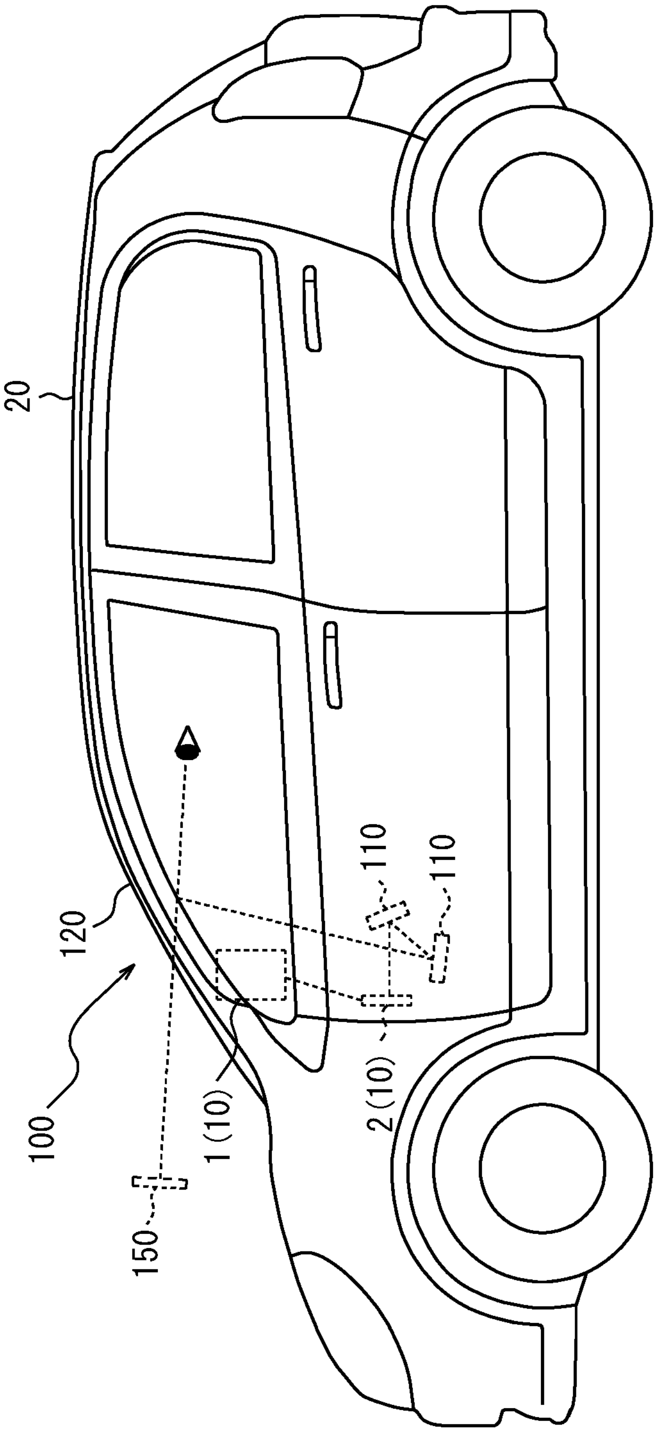


FIG. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2418862 A2
- WO 2018105533 A1
- EP 3037922 A1
- JP 2001166259 A